# EUROPÄISCHE PATENTSCHRIFT

(11) **EP 1 390 226 B1**
(45) Veröffentlichungstag und Bekanntmachung des Hinweises auf die Patenterteilung: **07.05.2008**
(21) Anmeldenummer: 02740376.5
(22) Anmeldetag: 22.05.2002
(51) Int. Cl.: B60N 2/12

(54) **EASY-ENTRY KRAFTFAHRZEUGSITZ MIT SITZLEHNENENTRIEGELUNG BEI RÜCKKEHR IN MEMORY POSITION**
EASY-ENTRY VEHICLE SEAT WHOSE SEAT BACK RELEASES WHEN RETURNING TO A MEMORY POSITION
SIEGE DE VEHICULE AUTOMOBILE D'ACCES AISE, AVEC DEVERROUILLAGE DU DOSSIER LORS DU RETOUR EN POSITION MEMOIRE

(30) Priorität: 25.05.2001 DE 10127153
(43) Veröffentlichungstag der Anmeldung: 25.02.2004
(73) Patentinhaber: Brose Fahrzeugteile GmbH & Co. KG, Coburg, 96450 Coburg (DE)
(72) Erfinder: RAUSCH, Peter, 96489 Niederfüllbach (DE); TAUBMANN, Werner, 96486 Lautertal (DE); KOPPENSTEIN, Jürgen, 96271 Grub am Forst (DE)
(74) Vertreter: Baumgärtel, Gunnar
(86) Internationale Anmeldenummer: PCT/DE2002/001909
(87) Internationale Veröffentlichungsnummer: WO 2002/094605

(56) Entgegenhaltungen:
- EP-A- 0 800 952
- WO-A-00/55002
- DE-A- 4 423 634
- US-A- 5 927 809

## Beschreibung

Die Erfindung betrifft einen Kraftfahrzeugsitz nach dem Oberbegriff des Patentanspruchs 1. Dieser umfasst ein Sitzgestell, eine auf dem Sitzgestell vorgesehene Sitzfläche und eine Rückenlehne, die schwenkbar an dem Sitzgestell gelagert ist und die im entriegelten Zustand einer Lehnenverriegelung aus ihrer Gebrauchsposition (entsprechend einer hochgeklappten Rückenlehne) heraus in Richtung auf eine Sitzfläche des Sitzgestells vorklappbar ist, um eine sogenannt Easy-Entry-Funktion auszulösen.

Derartige Sitze werden als Vordersitze in Kraftfahrzeugen eingesetzt, wobei durch das Vorklappen der Rückenlehne das Einsteigen eines Passagiers oder das Einschieben eines Gegenstandes in den Fond des Kraftfahrzeuges erleichtert werden soll. Eine zusätzliche Erleichterung beim Einsteigen, die bei zweitürigen Kraftfahrzeugen von Bedeutung ist, wird dadurch erreicht, dass der Sitz nach dem Vorklappen der Rückenlehne nach vorne verschoben werden kann. Hierzu weist ein aus der WO 00/55002 bekannter Kraftfahrzeugsitz folgendes auf:
- ein Sitzgestell;
- eine am Sitzgestell vorgesehene Sitzfläche;
- eine Rückenlehne, die schwenkbar an dem Sitzgestell gelagert ist und die in Richtung auf die Sitzfläche vorklappbar ist;
- eine Längsführung, mit der das Sitzgestell zur Einstellung der Sitzlängsposition in Sitzlängsrichtung bewegbar ist,
- eine Feststellvorrichtung zum Arretieren des Sitzgestells in einer zuvor eingestellten Sitzlängsposition;
- ein Betätigungselement zum Entriegeln der Feststellvorrichtung, so daß das Sitzgestell in Sitzlängsrichtung bewegbar ist;
- einen Koppelmechanismus zur Kopplung der Feststellvorrichtung mit der Rückenlehne, der auf das Betätigungselement einwirkt und dadurch die Feststellvorrichtung entriegelt, wenn die Rückenlehne in Richtung auf die Sitzfläche vorgeklappt ist;
- eine Memory-Einrichtung, mittels der das Sitzgestell bei einer Bewegung in Sitzlängsrichtung automatisch in einer vorgebbaren, als Memory-Position definierten Sitzlängsposition angehalten werden kann, wobei ein dem Sitzgestell zugeordneter, in Sitzlängsrichtung bewegbarer Anschlag mit einem Gegenanschlag der Memory-Einrichtung in Eingriff tritt;
- Einstellmittel der Memory-Einrichtung, mit denen die Memory-Position durch Verschieben der Position des Gegenanschlages in Sitzlängsrichtung einstellbar ist;
- eine Verriegelungsvorrichtung der Memory-Einrichtung zum Verriegeln einer eingestellten Memory-Position und
- Schaltmittel, mit denen die Verriegelungsvorrichtung entriegelbar ist, um die Memory-Position einstellen zu können.

Ein derartiger Sitz bietet zum einen die Möglichkeit, nach dem Vorklappen der Rückenlehne in Richtung auf die Sitzfläche das Sitzgestell, und somit den gesamten Fahrzeugsitz, nach vorne zu verschieben, um das Einsteigen eines Passagieres in den Fond zu erleichtern (Easy-Entry-Funktion). Gleichzeitig kann der Sitz anschließend sehr einfach wieder in seine ursprüngliche Sitzlängsposition verschoben werden, wenn diese Sitzlängsposition mittels der hierfür vorgesehenen Memory-Einrichtung als Memory-Position gespeichert ist. In diesem Fall wird das Sitzgestell beim Zurückschieben des Sitzes automatisch in der Memory-Position angehalten, wobei ein dem Sitzgestell zugeordneter Anschlag mit einem Gegenanschlag der Memory-Einrichtung zusammenwirkt.

Bei dem aus der WO 00/55002 bekannten Fahrzeugsitz ist weiterhin vorgesehen, dass der Koppelmechanismus, der auf das Betätigungselement der Feststellvorrichtung einwirkt und diese entriegelt, wenn die Rückenlehne in Richtung auf die Sitzfläche vorgeklappt ist, nur so lange auf das Betätigungselement einwirkt, wie die Rückenlehne vorgeklappt ist. Somit ist das Sitzgestell jederzeit durch Verriegeln der Feststellvorrichtung arretierbar, wenn die Rückenlehne nicht mehr vorgeklappt ist, also wieder in ihre Funktionsposition zurückgeklappt wurde. Dies bedeutet insbesondere, daß bei hochgeklappter Rückenlehne die Arretierbarkeit des Sitzgestells in einer aktuellen Sitzlängsposition unabhängig davon ist, ob die jeweilige Sitzlängsposition der Memory-Position entspricht.

Unter dem Sitzgestell werden dabei vorliegend jeweils sämtliche in Sitzlängsrichtung bewegbare Bestandteile der tragenden Sitzkonstruktion verstanden, also insbesondere auch diejenigen Bestandteile der Sitzlängsführung, wie z.B. eine Sitzschiene (Oberschiene), die bei einer Einstellung der Sitzlängsposition in Längsrichtung bewegt werden.

In der gattungsbildenden EP 0 800 952 A wird ein Kraftfahrzeugsitz beschrieben, bei dem eine Lehnenentriegelung mit einer Feststellvorrichtung zum Arretieren des Sitzgestells in einer zuvor eingestellten Sitzlängsposition gekoppelt ist.

Der Erfindung liegt das Problem zugrunde, einen Kraftfahrzeugsitz der eingangs genannten Art dadurch zu verbessern, dass der Bedienkomfort bei der Ausführung der Easy-Entry-Funktion erhöht wird.

Dieses Problem wird durch Schaffung eines Kraftfahrzeugsitzes mit den Merkmalen des Patentanspruchs 1 gelöst.

Danach ist am Sitzgestell ein Betätigungsmechanismus vorgesehen, der mit einer Lehnenentriegelung in Wirkverbindung steht und der beim Erreichen der Memory-Position des Sitzgestells die Rückenlehne entriegelt, so dass die (zum Verschieben des Sitzes bei Ausübung der Easy-Entry-Funktion auf die Sitzfläche vorgeklappte) Rückenlehne wieder in eine Gebrauchsposition (aufrechte Position) geklappt werden kann. Das Auslösen des Betätigungsmechanismus, welches die Entriegelung der Rückenlehne zur Folge hat, erfolgt automatisch beim Erreichen der Memory-Position des Sitzgestells, indem der Betätigungsmechanismus ein Auslöseelement umfasst, das beim Erreichen der Memory-Position mit einem Bauteil der Memory-Einrichtung in Anschlag gerät und dadurch den Betätigungsmechanismus auslöst, welcher die Lehnenverriegelung aufhebt. Zum Entriegeln der Rückenlehne ist das Auslöseelement über ein Zugmittel mit der Lehnenentriegelung gekoppelt, wobei das Auslöseelement über eine Hebelanordnung mit dem Bowdenzug verbunden ist.

Bei dem erfindungsgemäß gestalteten Kraftfahrzeugsitz ist eine Lehnenverriegelung zur Verriegelung der Rückenlehne nicht nur in ihren Gebrauchspositionen (einer im Wesentlichen aufrechten Position der Rückenlehne, in der sie den Rücken einer auf dem sitz befindlichen Person abstützen kann) sondern auch zur Verriegelung der Rückenlehne in einer Position vorgesehen, in der sie in Richtung auf die Sitzfläche vorgeklappt ist und dadurch das Verschieben des Sitzgestells zur Ausführung der Easy-Entry-Funktion ermöglicht. Dabei können durchaus unterschiedliche Verriegelungsmechanismen zum Verriegeln der Rückenlehne in ihren Gebrauchspositionen einerseits und ihrer vorgeklappten Position andererseits vorgesehen sein. Derartige Einrichtungen zur Verriegelung der Rückenlehne in ihrer Gebrauchsposition und/oder in einer vorgeklappten Position sowie zugehörige Anordnungen zur Entriegelung des jeweiligen Verriegelungsmechanismus sind bekannt und werden daher hier nicht näher beschrieben.

Die Entriegelung der Rückenlehne zum Zwecke des Vorklappens der Rückenlehne erfolgt bekannterweise durch Betätigung einer Lehnenentriegelung mittels eines an der Rückenlehne vorgesehenen Betätigungshebels, wodurch das Vorklappen der Rückenlehne in Richtung auf die Sitzfläche des Sitzgestells ermöglicht wird. Hierbei wird die Feststellvorrichtung der Sitzlängsführung entriegelt, so dass der Sitz mit vorgeklappter Rückenlehne nach vorne verschoben werden kann. Hierbei ist die Rückenlehne in ihrer vorgeklappten Position verriegelt. Dadurch wird erreicht, dass die Rückenlehne auch beim anschließenden Zurückschieben des Sitzes in die Memory-Position (nachdem der Einstieg von Passagieren in den Fond des Kraftfahrzeuges abgeschlossen ist) in der vorgeklappten Position verbleibt. Hierdurch wird die Handha- bung des Sitzes beim Vorschieben (um das Einsteigen von Personen in den Fond des Kraftfahrzeuges zu erleichtern) und beim daran anschließenden Zurückschieben (um den Sitz wieder in seine Memory-Position zu überführen, in der der Fahrer beziehungsweise Beifahrer auf diesem Platz nehmen kann) erleichtert und der Bedienkomfort erhöht.

Beim Erreichen der Memory-Position wird dann die vorgeklappte Rückenlehne entriegelt, ohne dass hierfür ein Hebel, Schalter oder dergleichen betätigt werden müsste. Die Entriegelung erfolgt vielmehr erfindungsgemäß durch einen Betätigungsmechanismus, der beim Erreichen der Memory-Position ausgelöst wird und eine Lehnenentriegelung betätigt, die die Verriegelung der Rückenlehne aufhebt. Dies ermöglicht dann ohne weiteres das abschließende Hochklappen der Rückenlehne wieder in eine Gebrauchsposition, in der sie zum Abstützen des Rückens einer auf dem Sitz befindlichen Position (Fahrer oder Beifahrer) dienen kann.

Das Auslöseelement wird vorzugsweise durch einen schwenkbar gelagerten Auslösehebel gebildet, der einen Anschlaghaken aufweist, welcher beim Erreichen der Memory-Position des Sitzgestelles mit einem Bauteil der Memory-Einrichtung in Anschlag gerät.

Das Auslöseelement kann über einen Bowdenzugs mit der Lehnenentriegelung gekoppelt sein.

Um sicherzustellen, dass die Rückenlehne tatsächlich verriegelt ist, wenn sich der Sitz mit vorgeklappter Rückenlehne zum Ausführen der Easy-Entry-Funktion außerhalb der Memory-Position befindet, ist der Betätigungsmechanismus derart elastisch vorgespannt, dass er ausserhalb der Memory-Position des Sitzgestelles keine Entriegelung der Rückenlehne bewirken kann. Hierzu kann beispielsweise ein elastisches Element (Federelement) auf das Auslöseelement einwirken.

In einer bevorzugten Ausführungsform der Erfindung handelt es sich bei dem Zugmittel, über das der Betätigungsmechanismus auf die Lehnenentriegelung einwirken kann, um eine separate, von dem Koppelmechanismus unabhängige Baugruppe, der zum Betätigen der Feststellvorrichtung beim Vorklappen der Rückenlehne dient. Das heißt, das Zugmittel bildet keinen Bestandteil dieses Koppelmechanismus.

In entsprechender Weise kann auch die Hebelanordnung, über die das Auslöseelement des Betätigungsmechanismus mit dem Zugmittel verbunden ist, als eine separate, von dem Koppelmechanismus unabhängige Baugruppe ausgebildet sein.

Weitere Merkmale und Vorteile der Erfindung werden bei der nachfolgenden Beschreibung eines Ausführungsbeispiels anhand der Figuren deutlich werden.

Es zeigen:
- Figur 1a -: eine perspektivische Darstellung von Teilen eines Sitzgestells mit einer Sitzlängsführung, mit einer Feststellvorrichtung der Sitzlängsführung sowie mit einer programmierbaren Memory-Einrichtung zum automatischen Auffinden einer vorgegebenen Sitzlängsposition, in einem Zustand, in dem die Rückenlehne des entsprechenden Sitzes sich in ihrer Gebrauchsposition befindet;
- Figur 1b -: eine Darstellung gemäß Figur 1a, wobei die Schienen der Sitzlängsführung nicht mit dargestellt sind;
- Figur 2 -: eine Darstellung gemäß Figur 1b, wobei die Rückenlehne des Sitzes aus ihrer Gebrauchsposition heraus ein Stück weit nach vorne geklappt worden ist;
- Figur 3 -: eine weitere Darstellung gemäß Figur 1b, wobei die Rückenlehne des Sitzes bis auf die zugehörige Sitzfläche vorgeklappt worden ist;
- Figur 4a -: eine perspektivische Darstellung einer Anordnung gemäß Figur 1a, auf deren Rückseite zusätzlich eine Einrichtung vorgesehen ist, die eine Verriegelung der Feststellvorrichtung der Sitzlängsführung außerhalb der Memory-Position bei vorgeklappter Rückenlehne verhindert;
- Figur 4b -: eine perspektivische Rückansicht der Anordnung aus Figur 4a;
- Figuren 4c und 4d -: zwei weitere Rückansichten der Anordnung aus Figur 4a, wobei die Schienen der Sitzlängsführung teilweise nicht mit dargestellt sind;
- Figur 4e -: eine Darstellung der Anordnung gemäß Figur 4a bei vorgeklappter Rückenlehne;
- Figuren 4f und 4g -: eine Darstellung der Anordnung gemäß den Figuren 4b und 4c bei vorgeklappter Rückenlehne;
- Figur 5a -: eine Rückansicht der Anordnung aus den Figuren 1a bis 3, wobei zusätzlich ein Betätigungsmechanismus zum automatischen Entriegeln der vorgeklappten Rückenlehne beim Erreichen der Memory-Position dargestellt ist;
- Figur 5b: - eine Explosionsdarstellung der Figur 5a;
- Figur 6 -: eine perspektivische Darstellung eines aus dem Stand der Technik bekannten Sitzgestelles in einem Zustand, in dem der Sitz mit hochgeklappter Rückenlehne in seiner Memory-Position verriegelt ist;
- Figur 6a: - eine Rückansicht der Darstellung aus Fig. 6;
- Figur 7 -: eine Darstellung gemäß Fig. 6 in einem Zustand, in dem die Rückenlehne nach vorne geklappt ist, um den Sitz mit vorgeklappter Rückenlehne verschieben zu können;
- Figur 8 -: eine Darstellung gemäß Fig. 6 in einem Zustand, in dem bei hochgeklappter Rückenlehne in der Memory-Position ein Betätigungshebel betätigt wurde, um die Memory-Position neu einzustellen;
- Figur 9 -: eine Darstellung gemäß Fig. 6 in einem Zustand, in dem die Memory-Position des Sitzes mit hochgeklappter Rückenlehne angefahren wird;
- Figur 10 -: eine Darstellung gemäß Fig. 6 in einem Zustand, in dem die Memory-Position des Sitzes mit hochgeklappter Rückenlehne erreicht wird;
- Figur 11 -: eine schematische Darstellung eines Sitzgestelles.

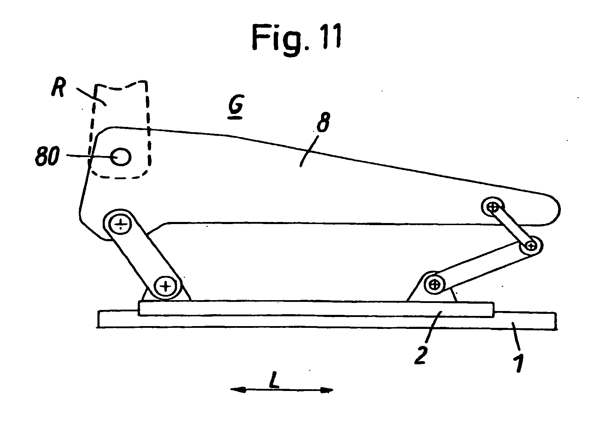

Das in Figur 11 in einer Seitenansicht dargestellte Sitzgestell G (Sitzuntergestell) umfaßt eine Sitzschiene 2, die in Sitzlängsrichtung L beweglich auf einer an der Fahrzeugkarosserie zu befestigenden Unterschiene 1 lagert, und ein Sitzseitenteil 8, das über vordere und hintere Gelenkhebel höhenverstellbar an der Sitzschiene 2 angelenkt ist. Auf seiner anderen, in Figur 11 nicht erkennbaren Längsseite weist das Sitzgestell G eine entsprechende Anordnung auf. Zwischen den beiden Sitzseitenteilen des Sitzgestelles G erstreckt sich eine Sitzfläche, die ein Sitzpolster aufnimmt, auf dem ein Fahrzeuginsasse Platz nehmen kann.

Ferner weisen die Seitenteile 8 des Sitzgestelles G jeweils eine Lagerstelle 80 zur schwenkbaren Lagerung einer in Figur 11 gestrichelt angedeuteten Rückenlehne R auf.

Vorliegend werden als Teile des Sitzgestell jeweils alle diejenigen Bauteile verstanden, die auf der karosseriefesten Unterschiene 1 in Sitzlängsrichtung bewegbar sind, also insbesondere die Sitzschiene 2, das Sitzseitenteil 8 sowie die hiermit verbundenen weiteren Bauteile des Sitzes.

Wird ein derartiger in Längsrichtung L verstellbarer Fahrzeugsitz für ein zweitüriges Fahrzeug verwendet, so ist es bekannt, zur Erleichterung des Einstiegs in den Fond des Fahrzeugs die Lehne an die Sitzlängsverstellung zu koppeln und zwar derart, daß bei einem Vorklappen der Rückenlehne R in Richtung auf die sich zwischen den Sitzseitenteilen 8 erstreckende Sitzfläche eine der Sitzlängsführung 1, 2 zugeordnete Feststellvorrichtung entriegelt wird und der Sitz mit vorgeklappter Rückenlehne vorgeschoben werden kann. Es handelt sich hierbei um eine sogenannte Easy-Entry-Funktion.

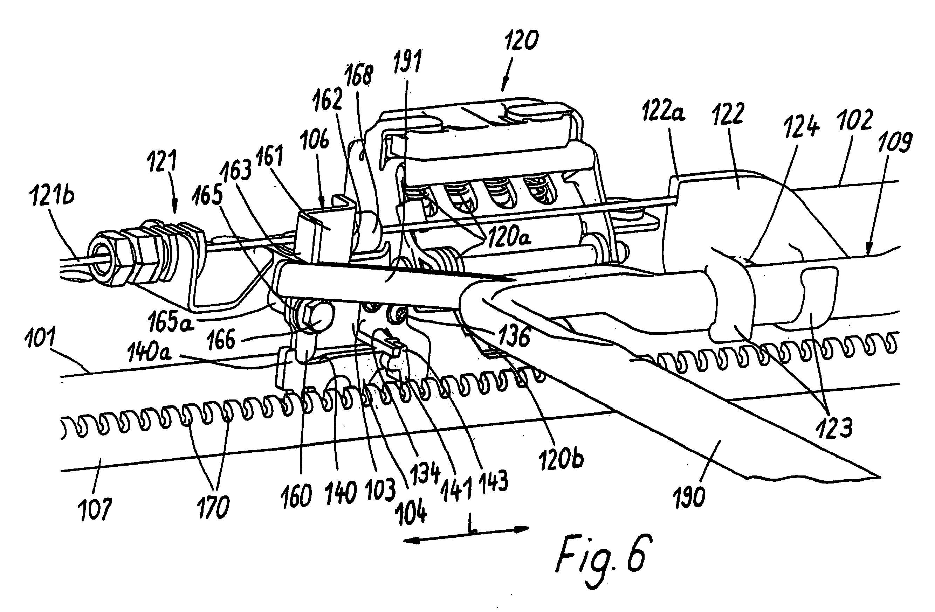

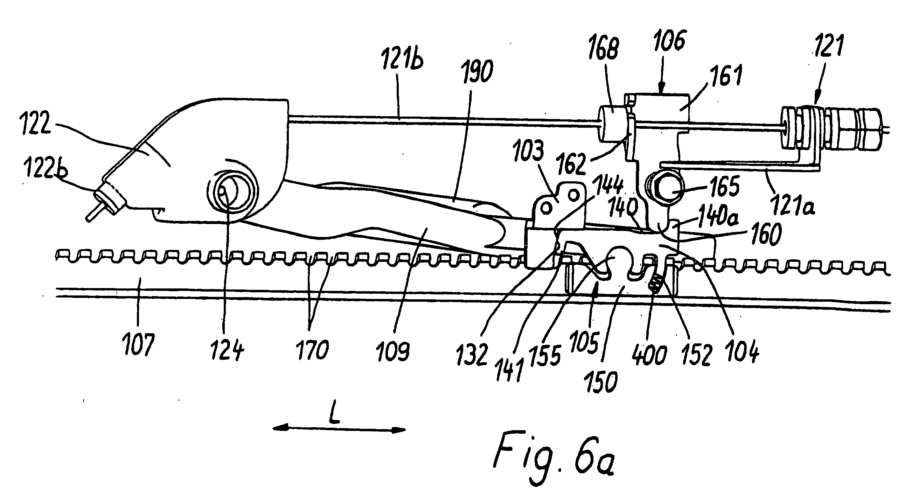

Im folgenden wird zunächst anhand einer in den Figuren 6 bis 10 dargestellten und aus der WO 00/55002 bekannten Sitzanordnung das Grundprinzip der Easy-Entry-Funktion bei Verwendung einer programmierbaren Memory-Einrichtung zum automatischen Auffinden einer vorgebbaren Sitzlängsposition erläutert.

In der perspektivischen Vorderansicht gemäß Figur 6 sowie der zugehörigen Rückansicht gemäß Figur 6a sind eine karosseriefeste Schiene 101 und eine daran in Sitzlängsrichtung L beweglich geführte Sitzschiene 102 dargestellt, wobei an der karosseriefesten Schiene 101 eine Rastschiene 107 mit einer Vielzahl in Sitzlängsrichtung L hintereinander angeordneter Rastöffnungen 170 befestigt ist. Die Sitzschiene 102 trägt die übrigen Komponenten des Sitzgestelles, vergl. Figur 11.

Die Sitzschiene 102 ist bezüglich der karosseriefesten Schiene 101 mittels einer Feststellvorrichtung 120 arretierbar. Hierbei kann es sich um eine übliche Feststellvorrichtung für eine Sitzlängsverstellung handeln. In den Figuren 6 und 6a sind das Gehäuse, ein schwenkbar gelagertes Betätigungselement 120b sowie eine auf das Betätigungselement 120b einwirkende Drehfeder einer bekannten Feststellvorrichtung dargestellt, deren Gehäuse an der Sitzschiene 2 befestigt ist. Die Drehfeder dient u.a. der Herausnahme von Spiel aus der Anordnung, um Klappergeräusche zu verhindern.

Diese Feststellvorrichtung umfaßt beispielsweise gemäß der DE 299 10 720 U1 eine Mehrzahl innerhalb des Gehäuses angeordneter Sperrzähne, die - mittels in dem Gehäuse gelagerter Federn in Form von Schraubenfedern - elastisch in Richtung auf eine an der karosserieseitigen Schiene 1 befestigte, in den Figuren 6 und 6a nicht erkennbare, Rasteinrichtungen vorgespannt sind. Aufgrund der auf die Sperrzähne wirkenden Vorspannung rasten die der Sitzschiene 102 zugeordneten Sperrzähne automatisch in die karroseriefeste Rasteinrichtung ein, so daß die Sitzlängsverstellung arretiert ist, wenn nicht mittels des hierfür vorgesehenen Betätigungselementes 120b die Sperrzähne außer Eingriff mit der Rasteinrichtung gebracht sind.

Da das Betätigungselement 120b der Feststellvorrichtung 120 mittels der Federanordnung 120a, die aus den innerhalb des Gehäuses angeordneten, auf die Sperrzähne einwirkenden Federn sowie der außerhalb des Gehäuses angeordneten Drehfeder besteht, entgegen der Richtung vorgespannt ist, in die es zum Entriegeln der Feststellvorrichtung 120 verschwenkt werden muß, kann die Feststellvorrichtung 120 nur dann entriegelt werden, wenn auf deren Betätigungselement 120b eine Kraft entgegen der Wirkung der Federanordnung 120a ausgeübt wird.

Zum Entriegeln der Feststellvorrichtung 120 kann das Betätigungselement 120b einerseits von einem Sitzbenutzer unmittelbar dadurch betätigt werden, daß dieser einen am Sitzgestell schwenkbar angelenkten, ein Querrohr 190 aufweisenden Betätigungshebel 109 an einem hierfür vorgesehenen (in den Figuren 6 und 6a nicht erkennbaren) Betätigungsgriff 190 ergreift und diesen entgegen dem Uhrzeigersinn verschwenkt, wodurch sich das Betätigungselement 120b entgegen der Vorspannung der Federanordnung 120a nach unten bewegt. Zum anderen kann die Feststellvorrichtung 120 auch durch Vorklappen der Sitzlehne entriegelt werden, wozu die Sitzlehne über einen Bowdenzug, der ein Seil 121b aufweist und dessen (nicht dargestellter) Bowden sich an einer Bowdenabstützung 121 abstützt, mit dem Betätigungshebel 109 gekoppelt ist. Ferner ist auf der Schwenkachse des Betätigungshebels 109 mittels eines Achsstummels 124 ein Getriebeteil 122 gelagert, das eine Führung 122a sowie eine Einhängung 122b für das Seil 121b des Bowdenzugs aufweist. Dieses Getriebeteil 122 setzt eine Straffung des Seiles 121b bei einem Vorklappen der Rückenlehne in eine Schwenkbewegung um, die wiederum durch zwei Arme 123 des Getriebes, welche den Betätigungshebel 109 umgreifen, auf diesen übertragen wird. Hierdurch verschwenkt der Betätigungshebel 109 bei einem Vorklappen der Rückenlehne im Uhrzeigersinn und entriegelt über das Betätigungselement 120b die Feststellvorrichtung 120.

Auf dem Seil 121b des Bowdenzugs ist zudem zwischen der Bowdenabstützung 121, die mittels eines Befestigungsbleches 121a an der Sitzschiene befestigt ist, und dem Getriebe 122 ein Seilnippel 168 befestigt, z.B. durch Verquetschen. Dem Seilnippel 168 ist ein Schaltelement in Form eines Schalthebels 106 zugeordnet, das mittels einer Lagerbuchse 165, eines Stufenbolzens 165a sowie einer Schraube 166 um eine durch die Längsachse des Stufenbolzens 165a gebildete Achse verschwenkbar gelagert und gleichzeitig an dem Sitzgestell bzw. dessen Sitzschiene 102 befestigt ist. Der Schalthebel 106 weist in einem oberen Abschnitt 161 einen Anschlag 162 auf, der unmittelbar neben dem Seilnippel 168 angeordnet ist und auf den der Seilnippel 168 in Sitzlängsrichtung einwirken kann, wodurch der Schalthebel 106 verschwenkt wird.

Der unterhalb der Lagerbuchse 165 sowie des Stufenbolzens 165a angeordnete zweite Endabschnitt des Schalthebels 106 bildet einen Betätigungsabschnitt 160, dem ein Betätigungsabschnitt einer Sperrklinke 104 der Memory-Einrichtung zugeordnet ist. Der Betätigungsabschnitt der Sperrklinke 104 wird dabei durch eine Betätigungsfläche 140 auf der Oberseite der Sperrklinke gebildet.

Der Schalthebel 106 ist vorliegend durch einen Fortsatz 191 des Betätigungshebels 109, auf dem sich der obere Abschnitt 161 des Schalthebels 106 mit einem Anschlag 163 vertikal (quer zur Sitzlängsrichtung L) abstützt, in der in den Figuren 6 und 6a gezeigten Position arretiert, in der dessen Betätigungsabschnitt 160 auf die Betätigungsfläche 140 der Sperrklinke 104 einwirkt. Das hierfür erforderliche Moment wird durch die Federanordnung 120a der Feststellvorrichtung 120 aufgebracht, die über das Betätigungselement 120b sowie den Betätigungshebel 109 auf den Hebelfortsatz 191 wirkt.

Alternativ oder zusätzlich kann die senkrechte Stellung des Schalthebels 106 auch durch eine unmittelbar dem Schalthebel 106 angeordnete Feder oder dadurch unterstützt werden, daß der Schalthebel 106 mit hinreichend Reibung gelagert ist, die durch die Wirkung der Druckfeder 400 der Sperrklinke 104 nicht überwunden werden kann.

Die Sperrklinke 104 selbst ist, wie insbesondere anhand Fig. 6a erkennbar, schwenkbar auf einem Lagerzapfen 155 eines Gleiters 105 gelagert, der mit einem Grundkörper 150 in Sitzlängsrichtung L beweglich neben den Rastöffnungen 170 der Rastschiene 107 geführt ist. Der Gleiter weist in seinem Grundkörper 150 eine Ausnehmung 152 auf, in der eine Druckfeder 400 angeordnet ist, die unterhalb des Betätigungsabschnittes 140 der Sperrklinke 104 auf diese einwirkt und dadurch die Sperrklinke 104 derart vorspannt, daß ein am anderen Ende der Sperrklinke 104 angeordneter Rasthaken 141 die Tendenz hat, in die Rastschiene 107 einzugreifen. Hieran wird in dem in den Figuren 6 und 6a dargestellten Zustand, in dem der Sitz mit nicht vorgeklappter Rückenlehne in der Memory-Position verriegelt ist, die Sperrklinke dadurch gehindert, daß der Betätigungsabschnitt 160 des Schalthebels 106 sich auf der Betätigungsfläche 140 der Sperrklinke 104 abstützt, so daß diese nicht um den Lagerzapfen 155 verschwenken kann, um den Rasthaken 141 mit der Rastschiene 107 in Eingriff zu bringen.

In dem in den Figuren 6 und 6a dargestellten Zustand befindet sich ferner ein Gegenanschlag 144 der Sperrklinke 104 in Kontakt mit einem Anschlag 132 eines Anschlagselementes 103, das mit Befestigungsschrauben 136 an der Sitzschiene 102 befestigt ist. Ferner befindet sich ein Mitnehmer 143 der Sperrklinke 104, der sich nach oben hin an den Anschlag 144 anschließt, in Eingriff mit einem Eingriffsbereich 134 des Anschlagselementes 103.

Wird in dem in den Fig. 6 und 6a dargestellten Zustand des Sitzes, in dem dieser in der Memory-Position verriegelt ist, die Rückenlehne nach vorne geklappt, so spannt sich das Seil 121b des Bowdenzuges und bewegt sich in Richtung auf das hintere (rückenlehnenseitige) Sitzende.

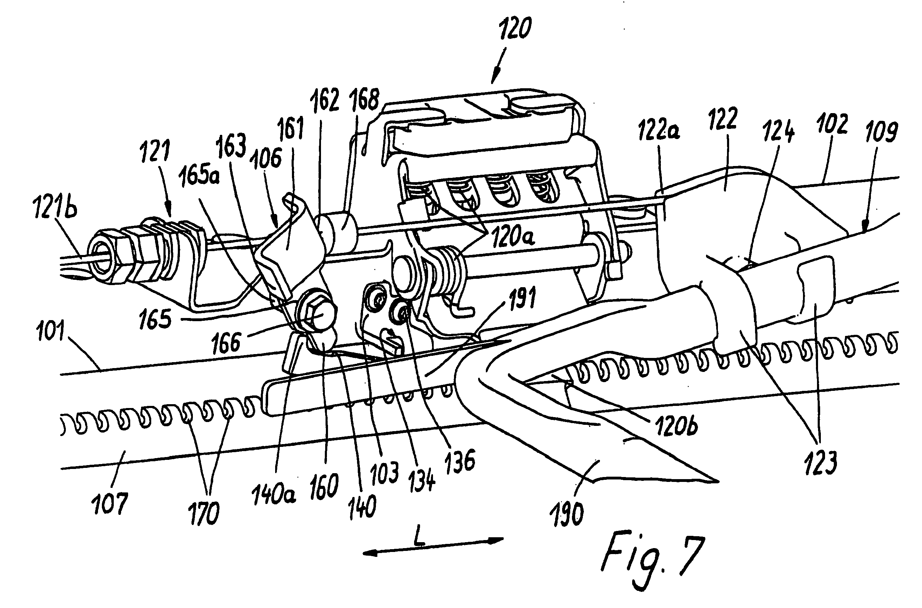

Hierdurch wird gemäß Fig. 7 zum einen der Betätigungshebel 109 über das Getriebeteil 122 sowie die Arme 123 entgegen dem Uhrzeigersinn verschwenkt, wobei er auf das Betätigungselement 120b einwirkt und die Feststellvorrichtung 120 entriegelt. Zum anderen bewegt sich der mit dem Seil 121b verquetschte Seilnippel 168 in Richtung des hinteren Sitzendes und wirkt dabei auf den Anschlag 162 im oberen Abschnitt 161 des Schalthebels 106 ein. Dabei wird der Schalthebel 106 entgegen dem Uhrzeigersinn verschwenkt, wobei dessen Betätigungsabschnitt 160 von der zugeordneten Betätigungsfläche 140 der Sperrklinke 104 abgehoben wird. Diese Schwenkbewegung des Schalthebels 106 ist möglich, da dieser nicht mehr durch den Hebelfortsatz 191 blockiert wird, der ja gemeinsam mit dem Betätigungshebel 109 nach unten verschwenkt wurde. Dadurch, daß der Schalthebel 106 die Sperrklinke 104 freigegeben hat, verschwenkt diese nun aufgrund der Wirkung der Druckfeder 400 (vergl. Fig. 6a) um den Lagerzapfen 155 des Gleiters 105, bis der Rasthaken 141 in eine Öffnung 170 der Rastschiene 107 eingreift. Hierbei wird die Sperrklinke 104 und somit insgesamt die Memory-Einrichtung verriegelt.

Die Schwenkbewegung der Sperrklinke 104 hat zudem die Folge, daß der Mitnehmer 143 der Sperrklinke 104 sowie der Eingriffsbereich 134 des Anschlagselementes 103 außer Eingriff geraten. Dies ist erforderlich, um das Sitzgestell verschieben zu können, da anderenfalls eine Bewegung des Sitzes durch die verriegelte Memory-Einrichtung blockiert würde.

Der Seilnippel 168 dient dabei hier als Sperrmittel, welches bei vorgeklappter Rückenlehne derart auf den Schalthebel 106 einwirkt, daß die Sperrklinke 104 nicht mittels des Schalthebels 106 entriegelt werden kann.

Die Anordnung ist derart ausgelegt, daß beim Vorklappen der Rückenlehne der Rasthaken 141 unter der Wirkung der Druckfeder 400 bereits in eine Rastöffnung 170 eingreifen kann, bevor die Feststellvorrichtung 120 soweit entriegelt ist, daß die Sitzschiene 102 bezüglich der karosseriefesten Schiene 101 verschiebbar ist. Hierdurch wird eine zuverlässige Speicherung der aktuellen Sitzlängsposition als Memory-Position gewährleistet. Sofern allerdings der Rasthaken 141 nicht unmittelbar in eine Rastöffnung 170 eingreifen kann, weil der Sitz derart positioniert ist, daß der Rasthaken 141 unter der Wirkung der Druckfeder 400 auf einem Steg zwischen zwei Rastöffnungen 170 aufschlägt, dann rastet der Rasthaken 141 erst nach einer geringfügigen Verschiebung des Sitzgestells in Sitzlängsrichtung L in die nächste Rastöffnung 170 ein, die er passiert. In einem solchen Fall ergibt sich also eine geringfügige Abweichung zwischen der Sitzlängsposition beim Vorklappen der Rückenlehne und der anschließend gespeicherten Memory-Position.

In dem in Fig. 7 gezeigten Zustand, der durch das Vorklappen der Rückenlehne erreicht wurde, kann das Sitzgestell nun mit vorgeklappter Rückenlehne in Sitzlängsrichtung L nach vorne verschoben werden, um den Einstieg eines Passagiers oder das Einschieben eines Gegenstandes in den Fond eines Kraftfahrzeugs zu erleichtern.

Wird der Sitz dann mit vorgeklappter Rückenlehne wieder nach hinten bewegt, so wird er spätestens in der durch die Sperrklinke 104 definierten Memory-Position automatisch angehalten. Denn beim Erreichen der Memory-Position gerät der Anschlag 132 des Sitzgestells mit dem Anschlag 144 der Memory-Einrichtung in Kontakt, wodurch eine weitere Bewegung des Sitzgestelles nach hinten verhindert wird.

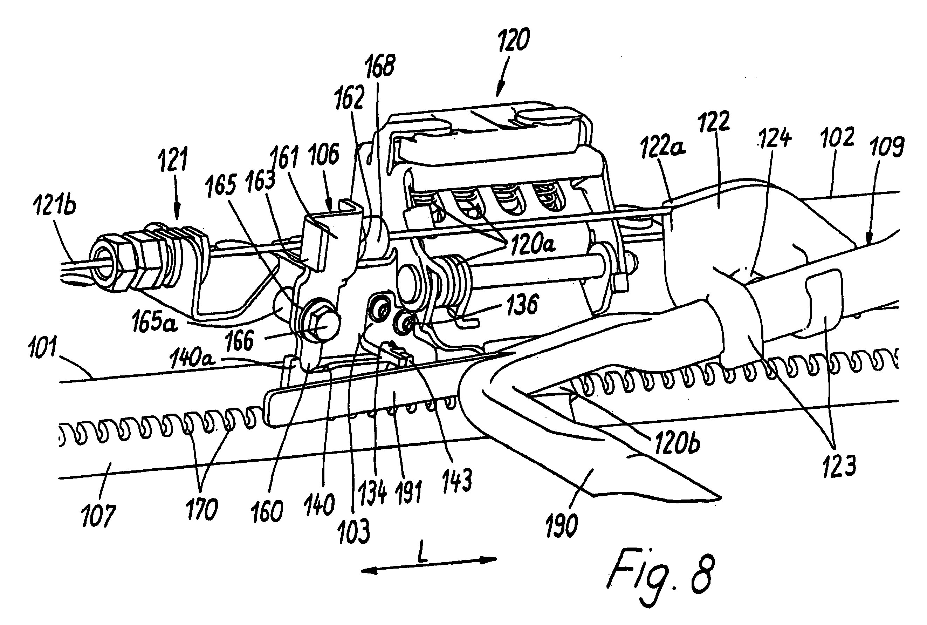

Wird sodann die Rückenlehne wieder in ihre Funktionsposition geklappt, dann löst sich die Spannung des Seiles 121b, und der Schalthebel 106 sowie der Betätigungshebel 109 mit dem daran befestigten Fortsatz 191 kehren zurück in die in den Fig. 6 und 6a dargestellte Lage. Wird sodann der Betätigungshebel 109 entgegen dem Uhrzeigersinn verschwenkt, um die Feststellvorrichtung 120 zu entriegeln, so stellt sich der in Fig. 8 gezeigte Zustand ein.

Beim manuellen Verschwenken des Betätigungshebels 109 mittels eines hierfür vorgesehenen Betätigungsgriffes wird zwar die Feststellvorrichtung 120 über das Betätigungselement 120b entriegelt, so daß das Sitzgestell in Sitzlängsrichtung L auf der karosseriefesten Schiene 101 bewegt werden kann; jedoch bleibt hierbei - im Unterschied zu einem Vorklappen der Rückenlehne - der Schalthebel 106 in seiner senkrechten Position, in der dessen Betätigungsabschnitt 160 vertikal auf die Betätigungsfläche 140 einwirkt. Hierdurch wird verhindert, daß die Sperrklinke 104 unter der Wirkung der Druckfeder 400 verriegelt wird.

Wegen des gemäß Fig. 8 nach unten verschwenkten Hebelfortsatzes 191, der dementsprechend nicht an dem zugeordneten Anschlag 163 des Schalthebels 106 anliegt, muß die vertikale Stellung des Schalthebels 106 beispielsweise durch eine geeignete Ausbildung der Betätigungsfläche 140 der Sperrklinke 104 gesichert werden. Die Betätigungsfläche 140 kann hierzu derart gekrümmt sein, daß sie unter der Wirkung der Druckfeder 400 der Sperrklinke 104 auf den Betätigungsabschnitt 160 des Schalthebels 106 kein Moment ausübt, das eine Schwenkbewegung des Schalthebels 106 entgegen dem Uhrzeigersinn zur Folge hätte. Mit anderen Worten ausgedrückt, muß das Zusammenspiel der Betätigungsfläche 140 der Sperrklinke 104 mit dem Betätigungsabschnitt 160 des Schalthebels 106 derart ausgelegt sein, daß durch die mittels der Druckfeder 400 von der Sperrklinke 104 her eingeleiteten Kräfte keine Schwenkbewegung des Schalthebels 106 entgegen dem Uhrzeigersinn ausgelöst wird. Eine Schwenkbewegung des Schalthebels 106 im Uhrzeigersinn wird demgegenüber durch den Seilnippel 168 blockiert.

Alternativ kann die senkrechte Stellung des Schalthebels 106 - wie bereits oben erwähnt - auch mittels eines geeigneten Federelementes oder durch hinreichend große Reibungskräfte gesichert werden.

Zusammenfassend führt die Betätigung des Betätigungshebels 109 in der Memory-Position des Sitzes (bei nicht vorgeklappter Rückenlehne) dazu, daß einerseits die Feststellvorrichtung 120 entriegelt wird, während gleichzeitig die Sperrklinke 104 und somit die Memory-Einrichtung insgesamt in dem entriegelten Zustand verbleibt, der bereits vor dem Verschwenken des Betätigungshebels 109 bestand, vergl. Figuren 6 und 6a. Außerdem greift der Mitnehmer 143 der Memory-Einrichtung in den Eingriffsbereich 134 des sitzschienenseitigen Anschlagselementes 103 ein.

In diesem Zustand führt eine Bewegung des Sitzgestelles in Sitzlängsrichtung L dazu, daß gleichzeitig die Sperrklinke 104 mitgenommen wird, so daß beim Verschieben des Sitzes zugleich auch eine neue Memory-Position eingestellt wird. Die neu eingestellte Memory-Position, die der durch Verschiebung des Sitzgestelles neu eingestellten Sitzlängsposition entspricht, wird jedoch nicht schon dann verriegelt, wenn schließlich der Betätigungshebel 109 losgelassen wird. Denn dies hat gemäß den Figuren 6 und 6a zunächst nur zur Folge, daß die Feststellvorrichtung 120 verriegelt wird und somit die Sitzschiene 102 bezüglich der karosseriefesten Schiene 101 arretiert ist. Eine Verriegelung der Memory-Einrichtung erfolgt demgegenüber gemäß Fig. 7 erst dann, wenn in der neuen Sitzlängsposition die Sitzlehne vorgeklappt wird. Sonach wird bei dem vorliegenden Ausführungsbeispiel die Memory-Einrichtung immer nur dann verriegelt, wenn der Sitz mit vorgeklappter Rückenlehne im Rahmen der Easy-Entry-Funktion nach vorne bewegt wird.

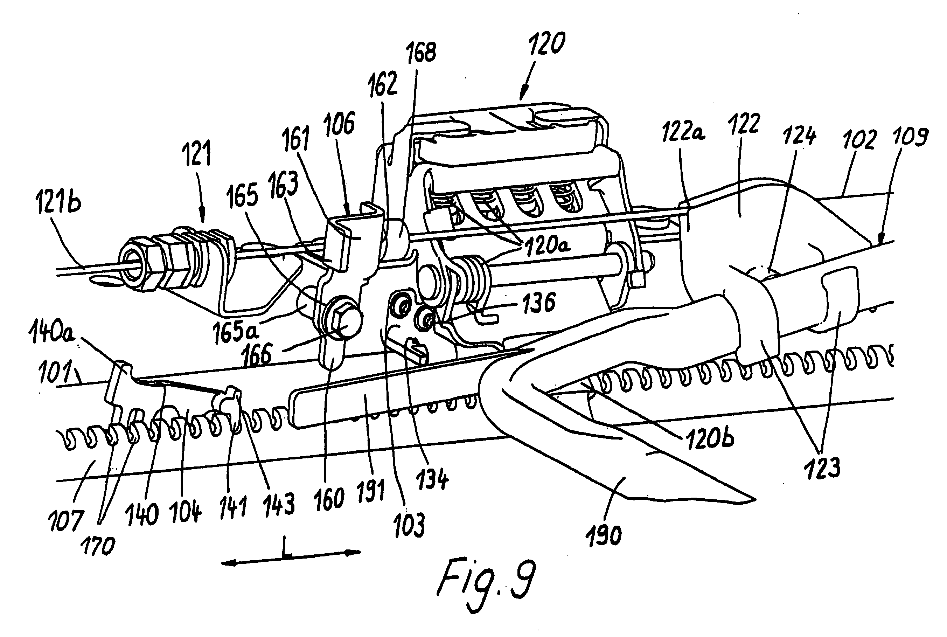

In Fig. 9 ist das Sitzgestell gezeigt, nachdem es zunächst mit vorgeklappter Rückenlehne in Sitzlängsrichtung L nach vorne verschoben wurde, wobei die Sperrklinke 104 verriegelt in der ursprünglichen Sitzposition zurückgelassen worden ist, und nachdem anschließend die Rückenlehne wieder in ihre Funktionsposition geklappt wurde. Außerdem ist der Betätigungshebel 109 derart verschwenkt, daß die Feststellvorrichtung 120 entriegelt ist und das Sitzgestell in Sitzlängsrichtung wahlweise nach vorne oder nach hinten verstellt werden kann. In jeder Sitzlängsposition, die hierbei erreicht wird, kann das Sitzgestell mittels der Feststellvorrichtung 120 bezüglich der karosseriefesten Schiene 1 arretiert werden, indem der Betätigungshebel 109 losgelassen wird.

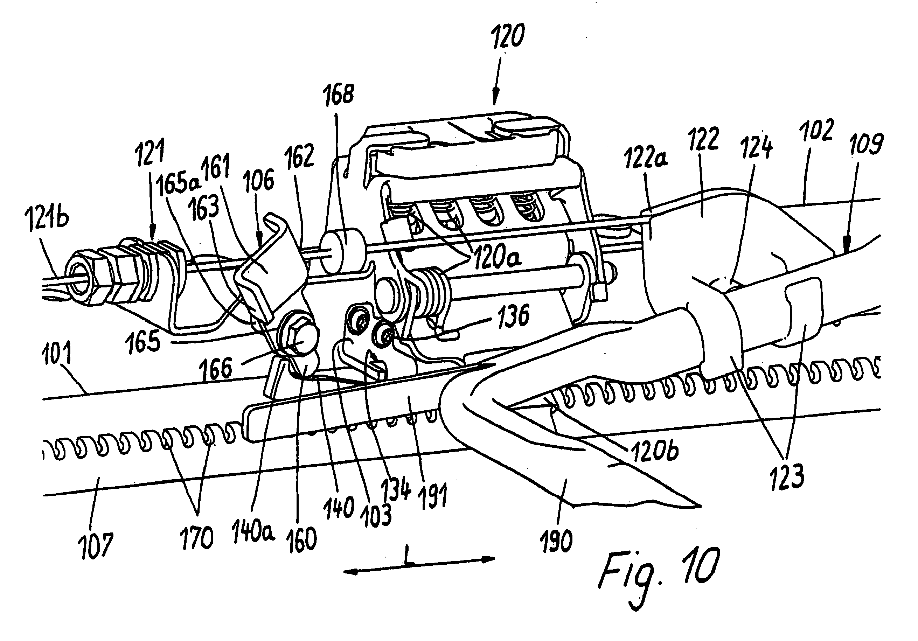

Fig. 10 zeigt schließlich den Zustand des Sitzgestells, wenn dieses mit aufgerichteter Rückenlehne bis in die Memory-Position zurückgefahren wird. Hierbei schlägt der Schalthebel 106 mit seinem Betätigungsabschnitt 160 an einem Vorsprung 140a an, der von der Betätigungsfläche 140 der Sperrklinke 104 vertikal nach oben absteht. Dies ist darauf zurückzuführen, daß sich die Sperrklinke 104 in dem verriegelten Zustand befindet, in dem sie mit ihrem Rasthaken 141 (vergl. Fig. 6a) in eine Rastöffnung 170 der Rastschiene 107 eingreift. Durch die hiermit verbundene Schrägstellung der Betätigungsfläche 140 der Sperrklinke 104 übt diese auf den Betätigungsabschnitt 160 des Schalthebels 106 ein Drehmoment mit einer Komponente parallel zur Sitzlängsrichtung L aus. Als Folge davon wird der Schalthebel 106 entgegen dem Uhrzeigersinn verschwenkt und dessen Betätigungsabschnitt 160 gerät in Anschlag mit dem Vorsprung 140a der Sperrklinke 104. Dies bewirkt, daß die Sperrklinke 104 weiterhin verriegelt bleibt, wenn das Sitzuntergestell die in Fig. 10 gezeigte Memory-Position erreicht.

Zusammenfassend wirkt demnach die Betätigungsfläche 140 im verriegelten Zustand der Sperrklinke 104 derart mit dem Betätigungsabschnitt 160 des Schalthebels 106 zusammen, daß dieser verschwenkt wird, wenn der Sitz mit aufgerichteter Rückenlehne in die Memory-Position geschoben wird, wodurch eine Entriegelung der Sperrklinke 104 verhindert wird. (Wenn der Sitz mit vorgeklappter Rückenlehne nach hinten in die Memory-Position geschoben wird, dann ist der Schalthebel 106 aufgrund der Wirkung des Seilnippels 168 ohnehin verschwenkt, vergl. Fig. 7, so daß auch in diesem Fall keine Entriegelung der Memory-Einrichtung erfolgen kann.) Andererseits wirken die Betätigungsfläche 140 der Sperrklinke 104 und der Betätigungsabschnitt 160 des Schalthebels 106 im entriegelten Zustand der Sperrklinke 104, vergl. Fig. 6, derart zusammen, daß die Sperrklinke 104 entriegelt bleibt, wie weiter oben anhand Fig. 6 näher ausgeführt wurde.

Wegen des verriegelten Zustandes der Sperrklinke 104 wird das Sitzgestell beim Erreichen der Memory-Position automatisch angehalten, wenn der Anschlag 132 des sitzgestellseitigen Anschlagselementes 103 mit dem Gegenanschlag 144 der Memory-Einrichtung (vergl. Fig. 6a) auf Block fährt.

Wird dann in der Memory-Position der Betätigungshebel 109 losgelassen, so wird dieser unter der Wirkung der Federanordnung 120a der Feststellvorrichtung 120 im Uhrzeigersinn verschwenkt, bis die Feststellvorrichtung 120 wieder verriegelt ist. Gleichzeitig wird durch den Fortsatz 191 des Betätigungshebels 109, der auf den abgewinkelten Anschlag 163 im oberen Abschnitt 161 des Schalthebels 106 einwirkt, der Schalthebel 106 im Uhrzeigersinn in seine senkrechte Stellung verschwenkt, wobei der Schalthebel 106 mit seinem Betätigungsabschnitt 160 auf die Betätigungsfläche 140 der Sperrklinke 104 einwirkt und diese (entgegen der Wirkung der Druckfeder 400) entriegelt (was eine entsprechende Auslegung der Federanordnung 120a erfordert). Der Sitz befindet sich dann wieder in dem anhand der Figuren 6 und 6a erläuterten Zustand mit hochgeklappter Rückenlehne in der Memory-Position.

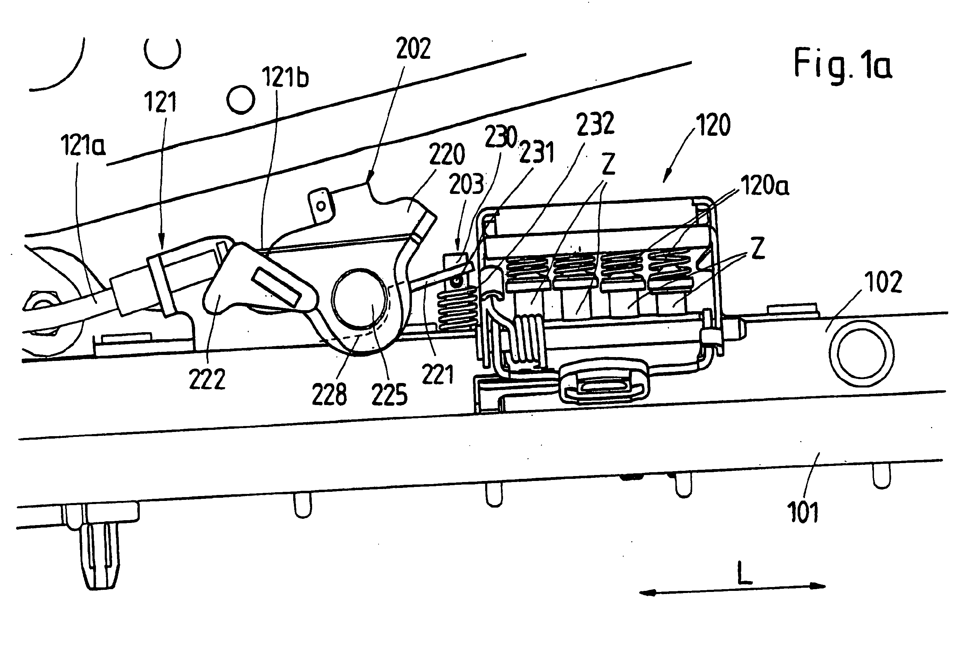

Es wir nun anhand der Figuren 1a bis 3 eine Weiterbildung des bekannten, vorstehend anhand der Figuren 6 bis 11 beschriebenen Kraftfahrzeugsitzes erläutert werden. Dabei stimmen der in den Figuren 6 bis 11 gezeigte Kraftfahrzeugsitz bzw. dessen Sitzgestell hinsichtlich der Ausbildung der Schienenlängsführung 101, 102, hinsichtlich der Ausbildung der Feststellvorrichtung 120 sowie hinsichtlich der Ausbildung der Memory-Einrichtung 104, 105, 107 mit dem anhand der Figuren 6 bis 11 beschriebenen Fahrzeugsitz im Wesentlichen überein. Auf diese Merkmale wird daher im Folgenden nicht näher eingegangen werden. Stattdessen wird diesbezüglich auf die vorangehenden Erläuterungen zu den Figuren 6 bis 11 verwiesen, wobei durch Verwendung übereinstimmender Bezugszeichen für einander entsprechende Bauteile in den Figuren 1a bis 3 einerseits und in den Figuren 6 bis 11 andererseits die erforderlichen Bezüge hergestellt sind.

Die wesentlichen, charakteristischen Merkmale der in den Figuren 1a bis 3 dargestellten Anordnung liegen in der Ausbildung eines Mitnehmers und eines zugeordneten Sperrelementes, die eine automatische Neueinstellung der Memory-Position ermöglichen, wenn der Fahrzeugsitz mit hochgeklappter Rückenlehne (Rückenlehne in Gebrauchsposition) verstellt wird und die eine Neueinstellung der Memory-Position verhindern, wenn der Fahrzeugsitz zur Ausübung der Easy-Entry-Funktion mit auf die Sitzfläche vorgeklappter Rückenlehne verschoben wird. Diese beiden Funktionsgruppen werden nachfolgend anhand der Figuren 1a bis 3 näher beschrieben werden.

In Figur 1a ist in perspektivischer Ansicht eine Sitzlängsführung 101, 102 bestehend aus einer karosseriefest anzuordnende Unterschiene 101 sowie einer das Sitzgestell tragenden Oberschiene 102 dargestellt. Diese Längsführung 101, 102 ermöglicht eine Einstellung der Sitzlängsposition (Lage des Sitzgestells in Sitzlängsrichtung L).

Zur Verriegelung einer zuvor eingestellten Sitzlängsposition ist eine Feststellvorrichtung 120 mit elastisch vorgespannten Sperrzähnen Z vorgesehen, die an der sitzseitigen Oberschiene 102 (Sitzschiene) angeordnet ist und deren Sperrzähne Z in zugeordnete Rastöffnungen der karosseriefesten Unterschiene eingreifen können, um die beiden Schienen 101, 102 zu verriegeln. Durch die elastische Vorbelastung der Sperrzähne Z in Richtung auf die zugeordneten Rastöffnungen hat die Feststellvorrichtung 120 die Tendenz, die beiden Schienen 101, 102 miteinander zu verriegeln, sofern diese nicht durch Einwirkung auf ein hierfür vorgesehenes Betätigungselement 120b (vergleiche Figuren 7 bis 10) entriegelt wird. Diese Einwirkung kann - wie vorstehend anhand der Figuren 6 bis 11 bereits dargelegt - einerseits durch eine unmittelbare Entriegelung der Feststellvorrichtung über einen geeigneten Betätigungshebel erfolgen oder mittelbar durch Vorklappen der Rückenlehne zum Auslösen der Easy-Entry-Funktion.

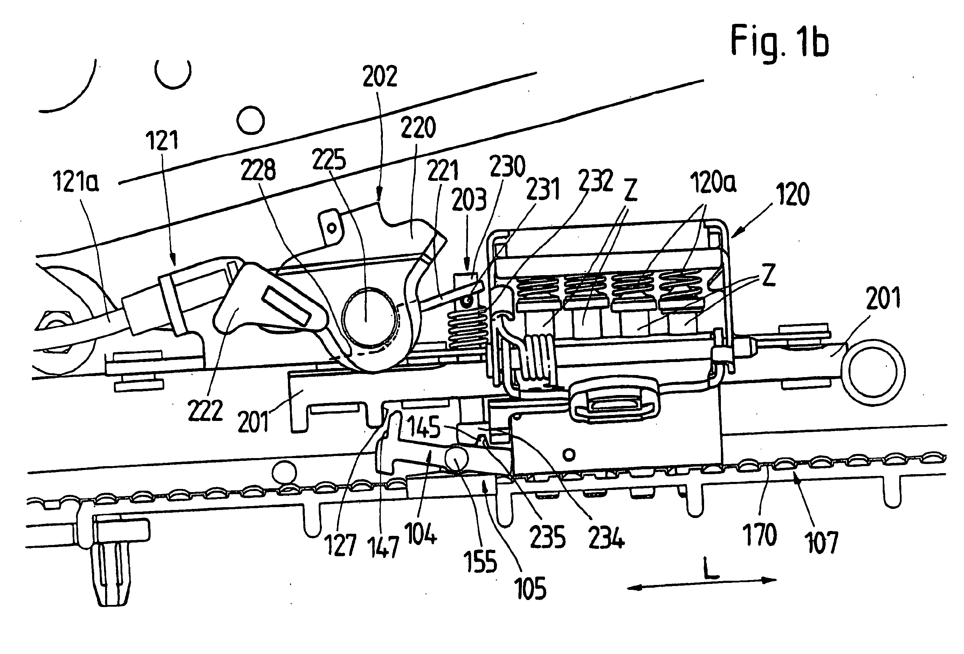

Weiterhin sind anhand der Figur 1a und insbesondere der Figur 1b, in der die Schienen 101, 102 nicht mit dargestellt sind, die wesentlichen Bestandteile einer Memory-Einrichtung 104, 105, 107 erkennbar, nämlich ein Gleiter 105, eine schwenkbar an dem Gleiter 105 angeordnete Sperrklinke 104 sowie eine mit Rastöffnungen 170 versehene Rastschiene 107, in die ein Rasthaken 141 der Sperrklinke 104 zur Verriegelung einer zuvor eingestellten Memory-Position eingreifen kann. Auch diesbezüglich wird für nähere Erläuterungen auf die Ausführungen zu den Figuren 6 bis 11 verwiesen.

In den Figuren 1a und 1b ist ein Ausschnitt des erfindungsgemäß ausgebildeten Sitzgestells in einem Zustand dargestellt, in dem der Sitz bei hochgeklappter (in seiner Gebrauchsposition befindlicher) Rückenlehne mittels der Feststellvorrichtung 120 in einer Memory-Position verriegelt ist.

In diesem Zustand wirkt auf die Sperrklinke 104 der Memory-Einrichtung ein Mitnehmer 203 derart ein, dass die Sperrklinke 104 mit ihrem Rasthaken 141 aus der Rastschiene 107 ausgehoben ist. Der Mitnehmer 203 ist längsverschieblich an der Sitzschiene 102 bzw. einem an der Sitzschiene 102 befestigten Halteteil 201 angeordnet und umfaßt einen längserstreckten Grundkörper 230, an dessen unterem, der Sperrklinke 104 zugewandten Ende ein mit einer Mitnahmeöffnung 235 versehenes Mitnahmeelement 234 ausgebildet bzw. befestigt ist. Dieser Mitnehmer 203 ist mittels eines elastischen Elementes 232 in Form einer Druckfeder (Rückstellfeder), die sich einerseits an dem Halteteil 201 und andererseits an einem von dem Grundkörper 230 des Mitnehmers 203 abstehenden Vorsprung 231 abstützt, derart in einer Richtung weg von der Sperrklinke 104 vorgespannt, dass er die Tendenz hat, von der Sperrklinke 104 abzuheben. Dies wird jedoch verhindert durch ein Sperrelement 221 am Grundkörper 220 eines um eine Achse 225 schwenkbar gelagerten Hebels 202, der mittels eines Federelementes 228 in Form einer Drehfeder derart in Richtung auf den Vorsprung 231 des Mitnehmers 203 vorgespannt ist, dass das Sperrelement 221 den Mitnehmer entgegen der Wirkung des am Mitnehmer vorgesehenen elastischen Elementes 232 gegen die Sperrklinke drückt, so dass der Rasthaken 141 der Sperrklinke 104 aus der Rastschiene 107 ausgehoben ist. Dadurch greift gleichzeitig ein als Rastnase ausgebildeter Vorsprung 145 der Sperrklinke 104 in die Mitnahmeöffnung 235 des Mitnehmers 203 ein.

Dies wird dadurch erreicht, dass das mittels der Drehfeder 228 vorgespannte Sperrelement 221 auf den Mitnehmer 203 eine Kraft in Richtung auf die Sperrklinke 204 ausübt, die größer ist als die aufgrund der Druckfeder 232 in entgegengesetzter Richtung wirkende Kraft. Somit ist der Rasthaken 141 aus den Rastöffnungen 170 der Rastschiene 107 ausgehoben und die Sperrklinke 104 kann bei einer Verschiebung des Sitzes mit hochgeklappter Rückenlehne in Sitzlängsrichtung L mitgenommen werden, so dass die Memory-Position bei der Verschiebung des Sitzes gleichzeitig neu eingestellt wird.

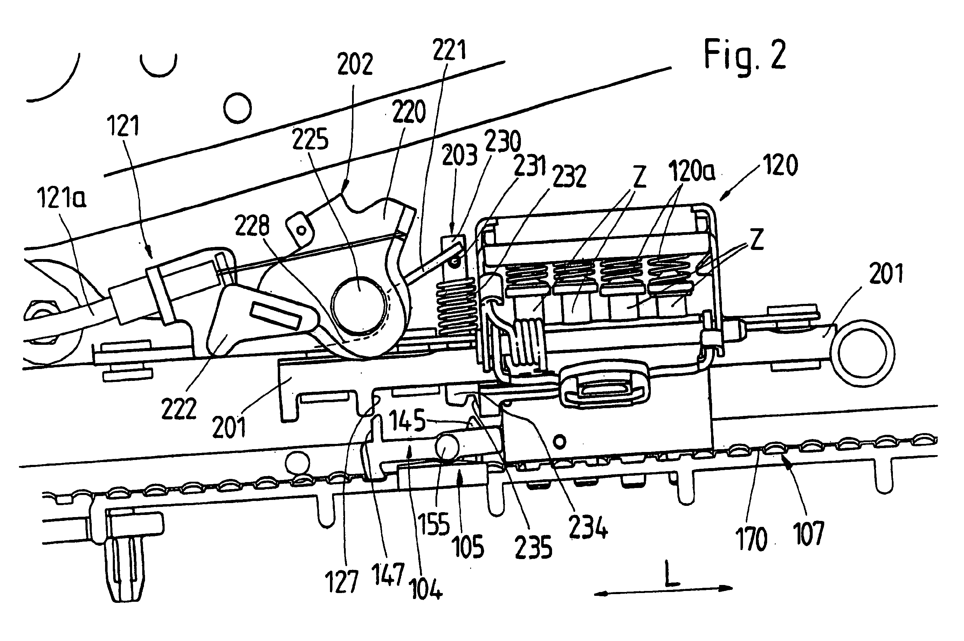

Wird in dem in den Figuren 1a und 1b gezeigten Zustand des Sitzes die Rückenlehne nach vorne in Richtung auf die Sitzfläche geklappt, so wird hierdurch die Seele 121a eines Bowdenzuges 121a, 121b gespannt, die mit einem Ende mit der Sitzlehne und mit dem anderen Ende mit dem Grundkörper 220 des schwenkbar gelagerten Hebels 202 verbunden ist. Hierdurch wird der Hebel 202 derart verschränkt, dass das Sperrelement 221 von dem Vorsprung 231 des Mitnehmers 203 und somit der Mitnehmer 203 unter der Wirkung der Druckfeder 232 von der Sperrklinke 104 abhebt. Da die Sperrklinke 104 - wie anhand der Figuren 6 bis 10 erläutert - wiederum mittels eines Federelementes derart unter Vorspannung steht, dass der Rasthaken 141 der Sperrklinke 104 die Tendenz hat, in eine der Rastöffnungen 170 der Rastschiene 107 einzugreifen, wird die Sperrklinke 104 in ihrer aktuellen Position verriegelt. Dies entspricht einer Verriegelung der Memory-Einrichtung 104, 105, 107 insgesamt. Dieser Zustand ist in Figur 2 dargestellt.

Der Mechanismus ist vorzugsweise derart ausgelegt, dass die Verriegelung der Memory-Einrichtung 104, 105, 107 bei einem Vorklappen der Rückenlehne aus einer vertikalen Gebrauchsposition um etwa 20° bis 40° erfolgt. Die Verriegelung der Memory-Einrichtung geschieht somit schon in der ersten Phase der Aktivierung des Easy-Entry-Mechanismus durch Vorklappen der Rückenlehne in Richtung auf die Sitzfläche. Die Feststellvorrichtung 120 ist in dieser ersten Phase des Vorklappens der Rückenlehne nach wie vor verriegelt, so dass noch keine Verschiebung des Sitzes in Längsrichtung L erfolgen kann.

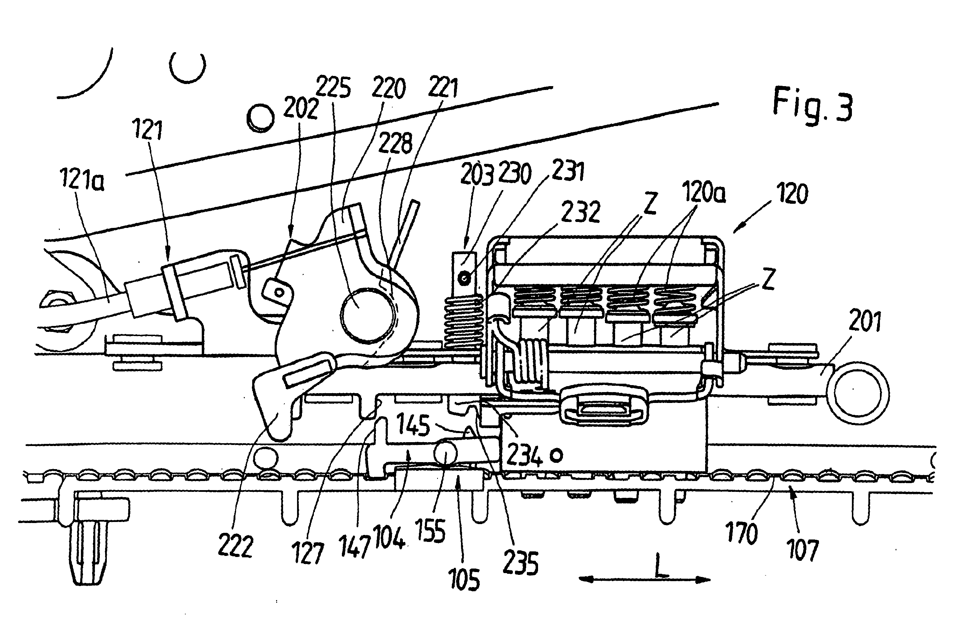

Dies wird erst bei einem weiteren Vorklappen der Rückenlehne ermöglicht, wobei gemäß Figur 3 ein an dem schwenkbar gelagerten Hebel 202 vorgesehener Betätigungsabschnitt 222 auf den - in den Figuren 7 bis 10 dargestellten - Betätigungshebel 109 der Feststellvorrichtung 120 einwirkt, so dass die Feststellvorrichtung 120 entriegelt wird. Dies ermöglicht dann eine Verschiebung des Sitzes in Längsrichtung L.

Demnach ist eine Verschiebung des Sitzes in Längsrichtung L bei einem Vorklappen der Rückenlehne zum Ausführen der Easy-Entry-Funktion erst möglich, nachdem die Sperrklinke 104 der Memory-Einrichtung 104, 105, 107 verriegelt worden ist. Somit ist die beim Vorklappen der Rückenlehne bestehende Memory-Position zuverlässig fixiert, bevor eine Verschiebung des Sitzes mit vorgeklappter Rückenlehne erfolgen kann. Diese Memory-Position kann dann beim anschließenden Zurückfahren des Sitzes wieder aufgefunden werden, wie oben anhand der Figuren 6 bis 10 erläutert. Es wird also verhindert, dass beim Ausüben der Easy-Entry-Funktion eine Verschiebung des Sitzes mit vorgeklappter Rückenlehne erfolgen kann bevor die Ausgangsposition des Sitzes als Memory-Position fixiert ist.

Dabei ist die gesamte Anordnung wegen der Verschieblichkeit des Mitnehmers 203 im Wesentlichen senkrecht zur Erstrekkungsrichtung L der Sitzlängsführung sowie wegen der schwenkbaren Lagerung des Hebels 202 mit dem Sperrelement 221 sehr kompakt und befindet sich im wesentlichen in dem von den Schienen 101, 102 der Schienenlängsführung umschlossenen Raum bzw. ragt lediglich nach oben aus diesem hinaus.

Wird gemäß den Figuren 1a bis 3 die Rückenlehne des Sitzes vorgeklappt, um die Easy-Entry-Funktion auszulösen, so kann das Problem auftreten, dass der Rasthaken 141 der Sperrklinke 104 nicht in eine der Rastöffnungen 170 der Rastschiene 107 eingreifen kann. Denn die Feststellvorrichtung 120 ermöglicht in der Regel eine stufenlose Einstellung der Sitzlängsposition, vergleiche etwa die in der DE 299 10 720 U1 beschriebene Feststellvorrichtung, während vorliegend für die Verriegelung der Memory-Position eine feinstufige (also keine stufenlose) Verrastung (unter Verwendung der Rastschiene 107 mit Rastöffnungen 170) vorgesehen ist. Es kann also der Fall auftreten, dass beim Vorklappen der Rückenlehne der Rasthaken 141 der Sperrklinke 104 nicht in eine Rastöffnung 170 eingreifen kann, sondern auf deren Rand aufsteht. Hierdurch ist zunächst keine Verriegelung der Memory-Position möglich.

Wird nun bei vorgeklappter Rückenlehne das Sitzgestell und somit auch die Sitzschiene 102 aus der Memory-Position heraus in Sitzlängsrichtung nach vorne verschoben (Easy-Entry), so wird hierbei die Sperrklinke 104 zusammen mit dem Gleiter 105 noch ein Stück weit mitgenommen, da ein an der Sitzschiene 102 vorgesehener Anschlag 127 auf einen zugeordneten sperrklinkenseitigen Anschlag 147 einwirkt. Die Sperrklinke 104 und der Gleiter 105 werden dabei nur soweit mitgenommen, bis der Rasthaken 141 der Sperrklinke 104 unter der Wirkung des an der Sperrklinke vorgesehenen Federelementes vollständig in die nächstgelegene Rastöffnung 170 der Rastschiene 107 eingreifen kann. Die Sperrklinke 104 und somit die Verriegelungsvorrichtung 104, 107 der Memory-Einrichtung 104, 105, 107 insgesamt sind dann in derjenigen Memory-Position verriegelt, die der Sitzlängsposition am nächsten liegt, in der die Feststellvorrichtung 120 vor dem Vorklappen der Rückenlehne verriegelt war.

In dem Verriegelungszustand, in dem der Rasthaken 141 der Sperrklinke 104 in eine Rastöffnung 170 der Rastschiene 107 eingreift, befindet sich der sperrklinkenseitige Anschlag 147 unterhalb des sitzschienenseitigen Anschlages 127, so dass diese Anschläge 127, 147 nicht mehr miteinander in Wirkverbindung treten können. Der Sitz kann dann weiter in Sitzlängsrichtung L nach vorne verschoben werden, wobei die Sperrklinke 104 und der Gleiter 105 in der zuvor verriegelten Memory-Position verbleiben.

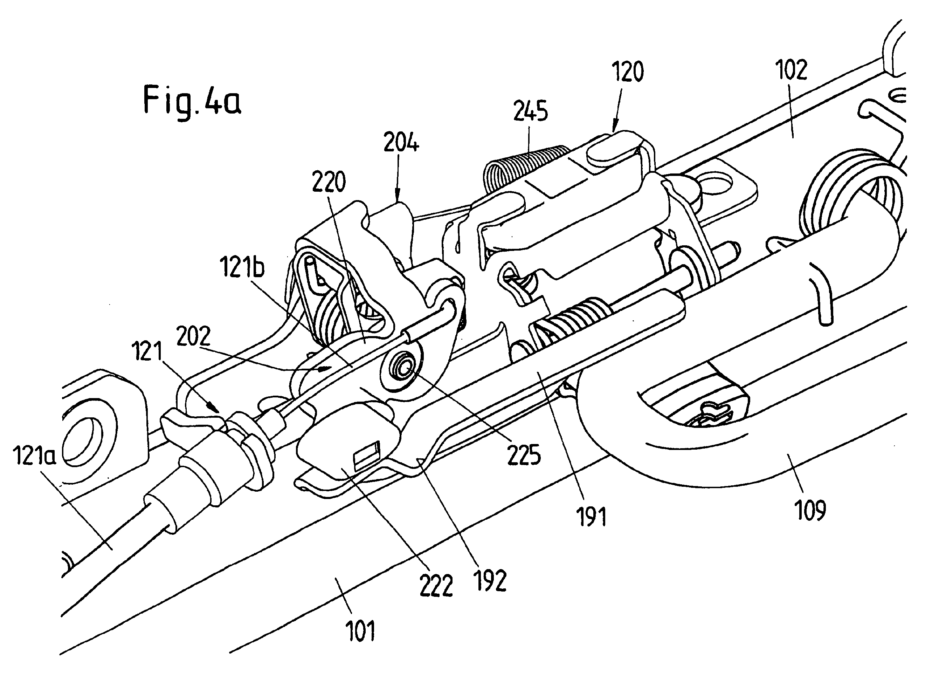

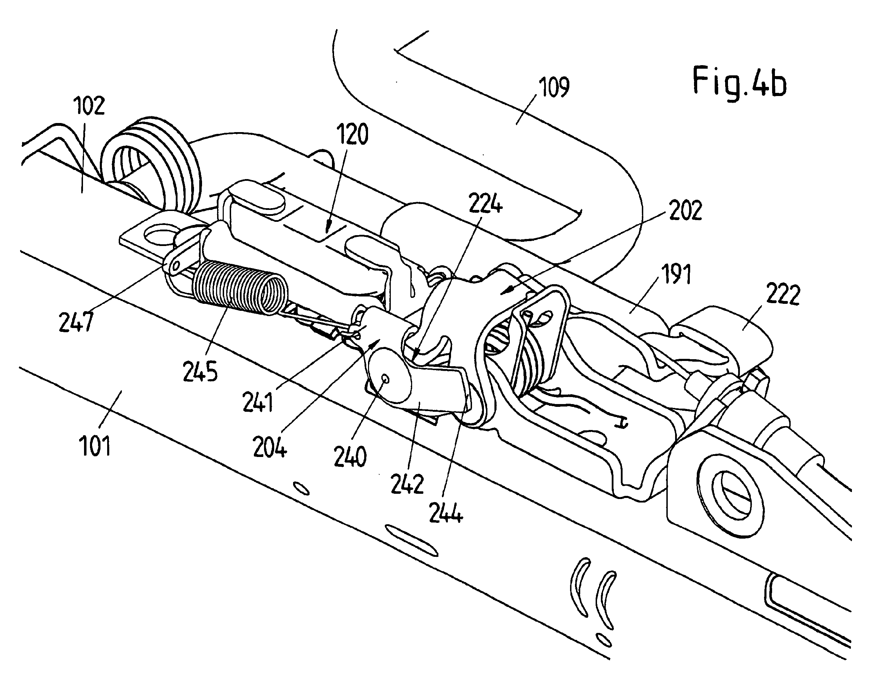

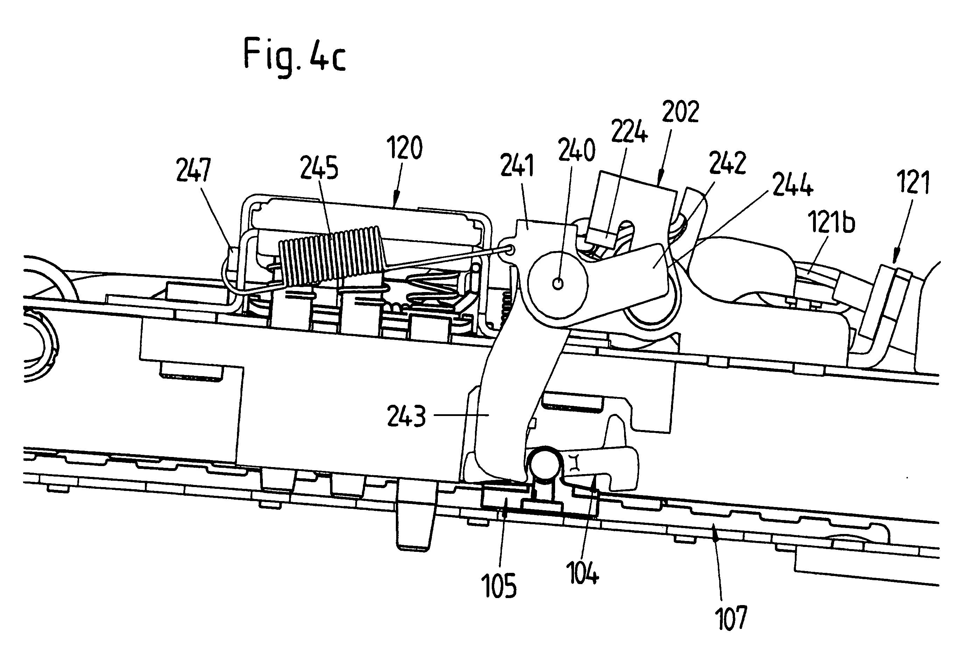

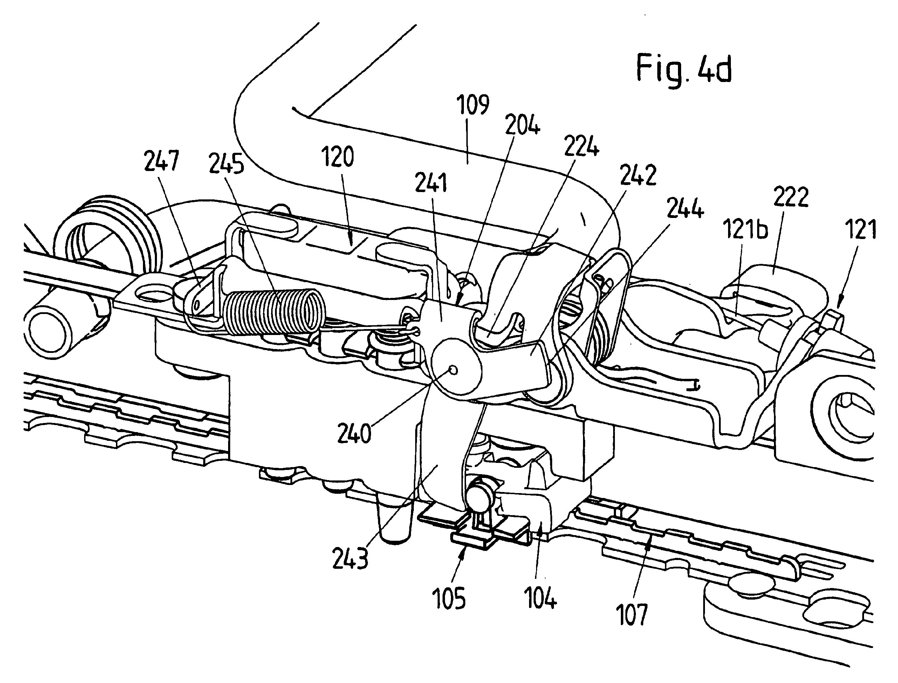

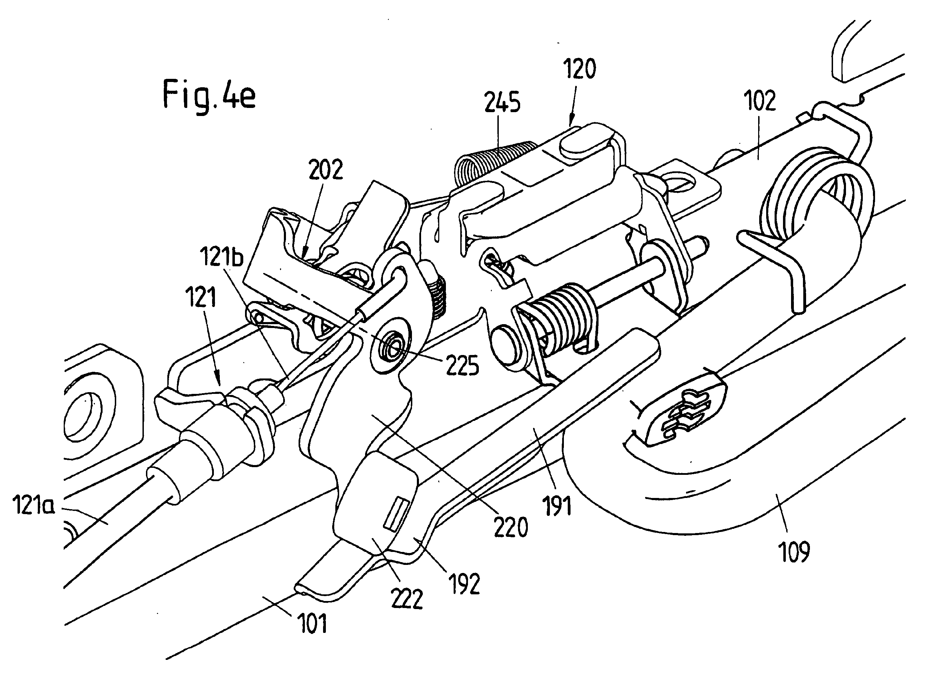

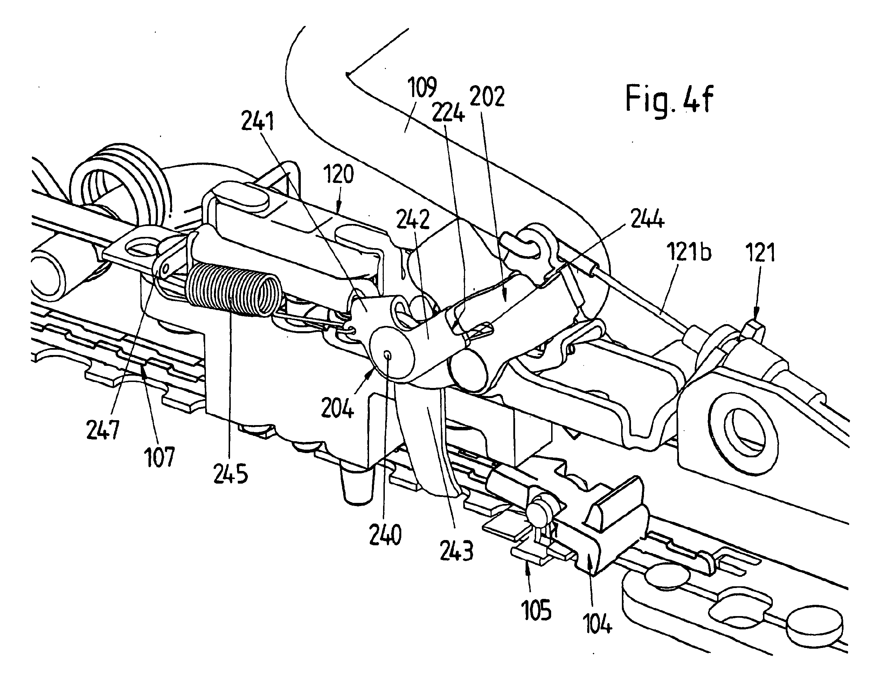

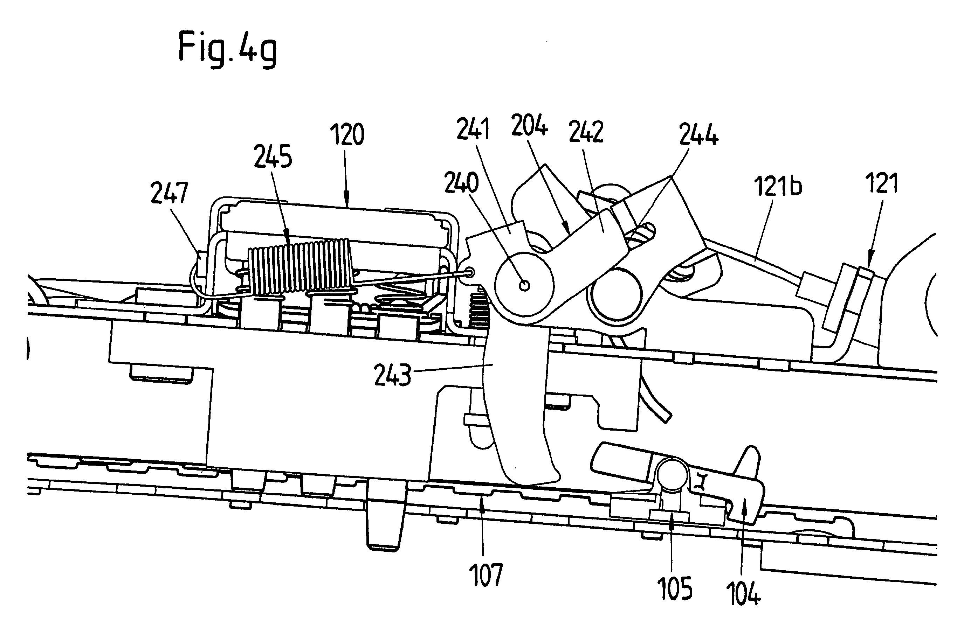

Die Figuren 4a bis 4d zeigen in verschiedenen Ansichten die Anordnung aus den Figuren 1a und 1b, wobei zusätzlich eine Einrichtung vorgesehen ist, die bei vorgeklappter Rückenlehne (entsprechend den Figuren 4e bis 4g) und außerhalb der Memory-Position eine Verriegelung der Feststellvorrichtung 120 verhindert.

Die in den Figuren 4a bis 4d dargestellte Anordnung weist entsprechend den Figuren 1a und 1b eine karosserieseitige Schiene 101, eine hierauf geführte Sitzschiene 102, eine Feststellvorrichtung 120 der Sitzlängsführung, einen Bowdenzug 121a, 121b mit einer Bowdenabstützung 121 zur Kopplung der Feststellvorrichtung 120 an die Rückenlehne und eine Memory-Einrichtung 104, 105, 107 auf. Zur Betätigung der Feststellvorrichtung 120 dient ein Betätigungshebel 109, der sowohl unmittelbar manuell als auch über einen Hebelfortsatz 191 und den Bowdenzug 121a, 121b durch Vorklappen der Rückenlehne zum Entriegeln der Feststellvorrichtung 120 betätigt werden kann. Zur Kopplung des Bowdenzugs 121a, 121b an den Hebelfortsatz 191 dient ein schwenkbar um seine Achse 225 gelagerte Hebel 202, an dessen Grundkörper 220 ein Ende der Seele 121b des Bowdenzugs 121a, 121b einhängt ist und der mit einem Betätigungsabschnitt 222 auf den Hebelfortsatz 191 einwirkt, wenn die Rückenlehne vorgeklappt, hierdurch die Seele 121b des Bowdenzugs gestrafft und der Hebel 202 entgegen dem Uhrzeigersinn verschwenkt wird.

Der Hebelfortsatz 191 weist in dem Bereich, in dem er mit dem Betätigungsabschnitt 222 des Hebels 202 zusammenwirkt, eine Ausbuchtung 192 zur Überhubkompensation auf, deren Funktion weiter unten anhand der Figuren 4e bis 4g erläutert werden wird.

Auf der Rückseite der in den Figuren 4a bis 4d dargestellten Anordnung ist an der Sitzschiene 102 ein Sperrglied 204 um eine Achse 240 schwenkbar gelagert, dessen einer Hebelarm 241 mittels einer mit einem Ende an einer an der Sitzschiene 102 angeordneten Federeinhängung 247 befestigten Zugfeder 245 verbunden ist, so dass das Sperrglied 204 in einer Drehrichtung (entgegen dem Uhrzeigersinn) elastisch vorgespannt ist. Der andere Hebelarm 242 des Sperrgliedes 204 bildet einen Anschlag 244, der nach dem Vorklappen der Rückenlehne mit einem zugeordneten Anschlag 224 des Hebels 202 zusammenwirkt, vergleiche Figuren 4e bis 4g. Dieser andere Hebelarm 242 des Sperrgliedes 204 verhindert bei in Gebrauchsposition befindlicher Rückenlehne (entsprechend der Darstellung in den Figuren 4a bis 4d) zudem eine Schwenkbewegung des Sperrgliedes 204 unter der Wirkung der Federvorspannung, indem er an dem Anschlag 224 des Hebels 202 anliegt.

Wird nun die Rückenlehne des Kraftfahrzeugsitzes zur Auslösung der Easy-Entry-Funktion nach vorne geklappt und der Sitz nach vorne verschoben, so verschwenkt beim Vorklappen der Rückenlehne - wie anhand der Figuren 1a bis 3 erläutert - der Hebel 202 aufgrund der Straffung der Seele 121b des Bowdenzugs 121a, 121b. Hierdurch wird das Sperrglied 204 freigegeben und es verschwenkt unter der Wirkung der von der Zugfeder 245 aufgebrachten Vorspannung derart, dass es sich mit seinem Anschlag 244 an den zugeordneten Anschlag 224 des Hebels 202 anlegt. Hierdurch ist der Hebel 202 in seiner durch Straffung der Seele 121b bewirkten, ausgelenkten Stellung arretiert und die Feststellvorrichtung 120 dauerhaft entriegelt, da ja der Hebel 202 gemäß Figur 4e in seiner ausgelenkten Position durch Einwirkung seines Betätigungsabschnittes 222 auf den Hebelfortsatz 191 ein Verschwenken des Betätigungshebels 109 und somit eine Entriegelung der Feststellvorrichtung 120 bewirkt.

Dieser entriegelte Zustand der Feststellvorrichtung 120 ist vorliegend durch die Wirkung des Anschlages 244 des Sperrgliedes 204 arretiert, so dass keine Verriegelung der Feststellvorrichtung 120 möglich ist, solange sich das Sitzgestell mit vorgeklappter Rückenlehne außerhalb der Memory-Position befindet.

Anhand Figur 4e ist noch erkennbar, dass bei einem Vorklappen der Rückenlehne über den Punkt hinaus, der zur vollständigen Entriegelung der Feststellvorrichtung 120 führt, der Betätigungsabschnitt 222 des Hebels 202 in die der Überhubkompensation dienende Ausbuchtung 192 des Hebelfortsatzes 191 gelangt, so dass ein weiteres, zusätzliches Verschwenken des Betätigungshebels 109 und somit eine zusätzliche Einwirkung auf die Feststellvorrichtung 120 vermieden wird, die zu einer Beschädigung der Feststellvorrichtung 120, z.B. durch Überbeanspruchung der Rückstellfedern, führen könnte.

Beim Anfahren der Memory-Position mit vorgeklappter Rückenlehne, um den Sitz wieder in eine Position zu führen, in der ein Insasse auf dem Sitz Platz nehmen kann, muss zunächst das Sperrglied 204 derart entgegen der Wirkung der Zugfeder 245 verschwenkt werden, dass der Hebel 202 freigegeben wird, bevor eine Verriegelung des Sitzgestells in der Memory-Position möglich ist. Hierzu kann ein drehfest mit dem Sperrglied 204 verbundenes Schwert 243 vorgesehen sein, das beim Anfahren der Memory-Position an den Gleiter 105 der Memory-Einrichtung 104, 105, 107 anschlägt, ausgelenkt wird und hierdurch ein Verschwenken des Sperrgliedes 204 entgegen der Federvorspannung auslöst.

Wird demgegenüber die Rückenlehne zu einem Zeitpunkt hochgeklappt, zu dem sich der Sitz außerhalb der Memory-Position befindet, so kommt es nicht zu einer Verriegelung der akteuellen Sitzlängsposition mittels der Feststellvorrichtung 120, das das Sperrglied 204 ein Zurückschwenken des Hebels 204 und somit ein Abheben des Betätigungshebels 109 von der entriegelten Feststellvorrichtung 120 bzw. deren Betätigungselement 120b verhindert.

Die in den Figuren 4a bis 4g dargestellte Anordnung zeichnet sich also dadurch aus, dass sie neben den anhand der Figuren 1a bis 3 beschriebenen und im Oberbegriff des Patentanspruchs 1 angegebenen Merkmalen eine Einrichtung aufweist, die bei vorgeklappter Rückenlehne und außerhalb der Memory-Position eine Verriegelung der Feststellvorrichtung 120 blockiert, und zwar auch dann, wenn die Rückenlehne außerhalb der Memory-Position hochgelappt wird. Dies geschieht durch Einwirkung auf ein Element (Hebel 202) des Koppelmechanismus, über den die Rückenlehne mit der Feststellvorrichtung 120 gekoppelt ist, um diese zu entriegeln. Die Einrichtung wirkt dabei über ein Sperrglied 204 derart auf den Koppelmechanismus, nämlich auf den Hebel 202, ein, dass die beim Vorklappen der Rückenlehne erfolgte Entriegelung der Feststellvorrichtung 120 nicht aufhebbar ist, weil der Koppelmechanismus in der Position blockiert bzw. arretiert wird, in der er zur Entriegelung der Feststellvorrichtung 120 auf diese einwirkt.

Beim erneuten Anfahren der Memory-Position nach Auslösung der Easy-Entry-Funktion wirkt dann ein Element (Schwert 243) der Einrichtung derart mit einem Teil (Gleiter 105) der Memory-Einrichtung 104, 105, 107 zusammen, dass der Koppelmechanismus, nämlich dessen Sperrglied 202, wieder freigegeben wird und eine Verriegelung der Feststellvorrichtung 120 erfolgen kann.

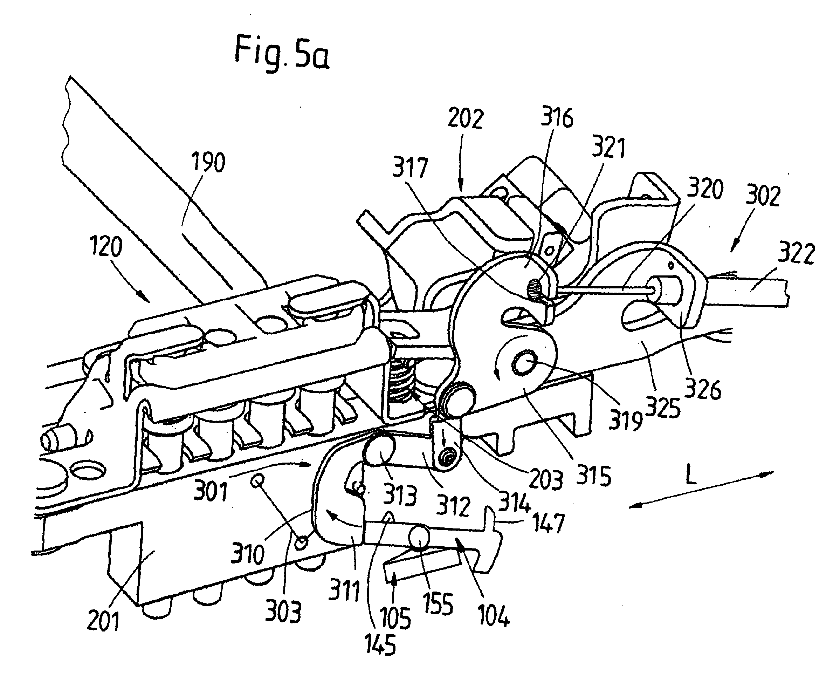

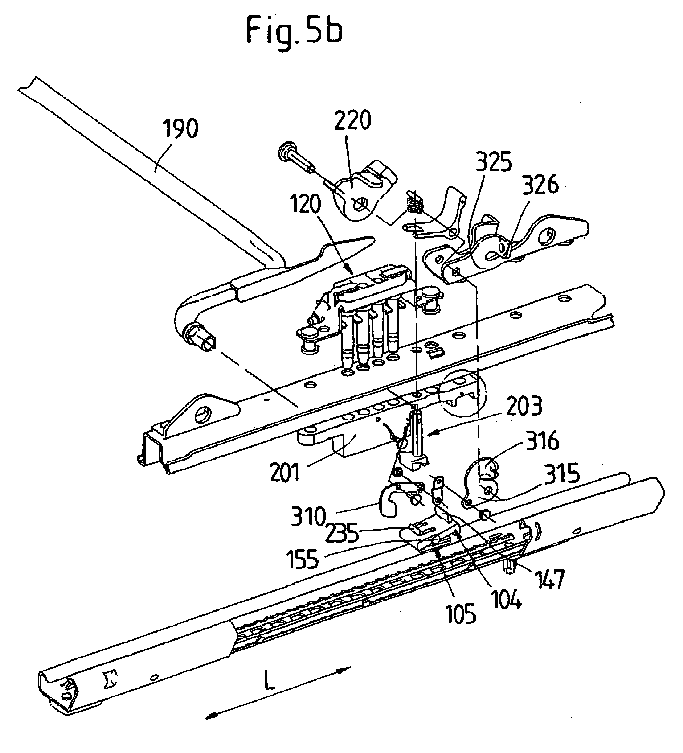

Figur 5a zeigt in perspektivischer Darstellung eine Rückansicht der in den Figuren 1a bis 3 gezeigten Anordnung, wobei zusätzlich ein Betätigungsmechanismus 301 vorgesehen ist, der mit einer Lehnenentriegelung der Rückenlehne in Wirkverbindung steht. Sämtliche Einzelteile sind dabei in der Explosionsdarstellung gemäß Figur 5b erkennbar.

Gemäß den Figuren 5a und 5b ist zusätzlich zu den vorstehend anhand der Figuren 1a bis 3 beschriebenen Elementen zur Betätigung der Feststellvorrichtung 120 mittels eines Bowdenzugs beim Vorklappen der Rückenlehne sowie zur Einstellung der Memory-Position beim Ausführen der Easy-Entry-Funktion mit vorgeklappter Rückenlehne ein Betätigungsmechanismus 301 vorgesehen, der mit einer Lehnenentriegelung der Rückenlehne in Wirkverbindung steht. Dieser Betätigungsmechanismus entriegelt beim Zurückschieben des Sitzes in die Memory-Position nach dem Ausführen der Easy-Entry-Funktion die Rückenlehne automatisch.

Der Betätigungsmechanismus 301 weist einen mittels eines Bolzens 313 an der sitzseitigen Schiene 102 der Schienenlängsführung verschwenkbar angelenkten Auslösehebel 310 auf, dessen eines Ende als Anschlaghaken 311 ausgebildet ist. Durch Krafteinwirkung auf diesen Anschlaghaken 311 wird der Auslösehebel 310 ausgelenkt, wenn der Fahrzeugsitz beim Zurückschieben die Memory-Position erreicht.

An dem anderen Ende 312 des Auslösehebels 310 ist eine Koppelstange 314 angelenkt, die wiederum mit einem Anlenkhebel 315 gelenkverbunden ist. Die Koppelstange 314 dient somit zur gelenkigen Kopplung des Auslösehebels 310 mit dem Anlenkhebel 315, der mittels eines Bolzens 319 schwenkbar an einem fest an der sitzseitigen Schiene 102 angeordneten Bauteil 325 gelagert ist.

Der Anlenkhebel 315 weist einen Aufnahmeabschnitt 316 mit einer schlitzförmigen Aufnahme 317 für ein Ende 321 (Seilnippel) eines Zugmittels 320 in Form eines Seiles auf. Die schlitzförmige Aufnahme 317 des Aufnahmeabschnittes 316 dient demnach als Seileinhängung.

Das Seil 320 bildet die Seele eines Bowdenzuges 302, über den der Anlenkhebel 315 mit einer Lehnenentriegelung der Rückenlehne gekoppelt ist. Die Bowdenhülle 322 des Bowdenzugs 302 stützt sich dabei mit ihrem dem Betätigungsmechanismus 301 zugewandten Ende an einem Anschlag 326 des fest an der sitzseitigen Schiene 102 angeordneten Bauteiles 325 ab.

An seinem anderen Ende wirkt der Bowdenzug 302 mittels des Zugmittels 320 auf die Lehnenentriegelung der Rückenlehne ein, deren Betätigung ein Zurückklappen der Rückenlehne in eine Gebrauchsposition ermöglicht. Mittel zur Entriegelung der Rückenlehne zum Zwecke des Klappens der Rückenlehne, insbesondere um das Einsteigen von Passagieren in den Fond des Kraftfahrzeugs zu erleichtern, sind allgemein bekannt. Auf die Erläuterung einer Lehnenentriegelung kann daher hier verzichtet werden. Von Bedeutung ist vorliegend vielmehr der Betätigungsmechanismus 301, er ein automatisches Betätigen der Lehnenentriegelung beim Erreichen der Memory-Position des Sitzes bewirkt.

An der sitzseitigen Schiene 102 beziehungsweise dem Gehäuse der hiermit verbundenen Feststellvorrichtung 120 ist ferner eine Schenkelfeder 303 gelagert, deren einer Schenkel auf den Auslösehebel 310 des Betätigungsmechanismus 301 einwirkt und diesen derart elastisch vorspannt, dass außerhalb der Memory-Position der Betätigungsmechanismus 301 keine Entriegelung der Rückenlehne auslöst.

Wird ein Fahrzeugsitz mit dem in den Figuren 5a und 5b beschriebenen Betätigungsmechanismus 301 nach Ausübung der Easy-Entry-Funktion (das heisst nach dem Vorschieben des Fahrzeugsitzes mit vorgeklappter Rückenlehne) mit der weiterhin vorgeklappten und in ihrer vorgeklappten Position verriegelten Rückenlehne wieder in die ursprüngliche, als Memory-Position definierte Position zurückgeschoben, so gerät beim Erreichen der Memory-Position der Anschlaghaken 311 des Auslösehebels 310 in Anschlag mit der Sperrklinke 104 der Memory-Einrichtung 104, 105, 107. Hierdurch wird der Auslösehebel 310 entgegen der Wirkung der Schenkelfeder 303 ausgelenkt, wie anhand eines Pfeiles in Figur 5a angedeutet.

Die Schwenkbewegung des Auslösehebels 310 wird über die Koppelstange 312 übertragen auf den Anlenkhebel 315, der hierdurch eine (in Figur 5a ebenfalls durch einen Pfeil angedeutete) Schwenkbewegung um den Lagerbolzen 319 ausführt. Aufgrund dieser Schwenkbewegung wird das in einer Seileinhängung 317 des Anlenkhebels 315 mit einem Ende 321 eingehängte Seil 320 des Bowdenzugs 302 gestrafft. Durch die Straffung des Seiles 320 wird die Lehnenentriegelung betätigt, so dass sich die Rückenlehne beim Erreichen der Memory-Position automatisch wieder in ihre ursprüngliche Stellung hochklappen lässt.

Der Betätigungsmechanismus 301 ermöglicht somit im Zusammenspiel mit dem Bowdenzug 302 eine automatische Entriegelung der Rückenlehne beim Erreichen der Memory-Position des Sitzgestelles. Es ist daher nicht erforderlich, zur Entriegelung der Rückenlehne einen separaten Entriegelungshebel zu betätigen. Hierdurch wird der Bedienkomfort bei der Ausübung der Easy-Entry-Funktion weiter verbessert.

Ferner geschieht auch das Hochklappen der Rückenlehne beim Erreichen der Memory-Position quasi automatisch, da zum Zurückschieben des Fahrzeugsitzes in die Memory-Position ohnehin eine Kraft auf die Rückenlehne nach hinten ausgeübt werden muss. Nach der Entriegelung der Rückenlehne beim Erreichen der Memory-Position erfolgt dann unter Einwirkung dieser Kraft das Hochklappen der nun entriegelten Rückenlehne.

Nach dem Hochklappen der Rückenlehne wird die Memory-Einrichtung - wie anhand der Figuren 1a und 1b dargestellt - mittels des Mitnehmers 203 wieder entriegelt, das heisst die Sperrklinke 104 wird aus den Rastöffnungen 170 der Rastschiene 107 ausgehoben. Hierbei wird das dem Anschlaghaken 311 des Auslösehebels 310 zugewandte Ende der Sperrklinke 104 derart abgesenkt, dass der Anschlaghaken 311 nicht mehr an diesem Ende der Sperrklinke 104 anliegt. Der Auslösehebel 310 kehrt dann unter der Wirkung der Schenkelfeder 303 in eine Stellung zurück, in der die Straffung des Zugmittels 320 aufgehoben und die Rückenlehne nicht mehr entriegelt ist.

Der Betätigungsmechanismus 301 und der Bowdenzug 302 bilden dabei vorliegend jeweils eine eigenständige Baugruppe, die unabhängig von den anhand der Figuren 1a bis 3 beschrieben Mitteln zum Entriegeln der Feststellvorrichtung 120 beim Vorklappen der Rückenlehne und zur Einstellung der Memory-Position ist.

## Patentansprüche

1. Kraftfahrzeugsitz mit
- einem Sitzgestell (G),
- einer Rückenlehne (R), die schwenkbar an dem Sitzgestell (G) gelagert ist und die in einem entriegelten Zustand aus ihrer Gebrauchsposition heraus in Richtung auf eine Sitzfläche des Sitzgestells (G) vorklappbar ist,
- einer Längsführung (101, 102) mit der das Sitzgestell (G) zur Einstellung der Sitzlängsposition in Sitzlängsrichtung (L) bewegbar ist,
- einer Feststellvorrichtung (120) zum Arretieren des Sitzgestells (G) in einer zuvor eingestellten Sitzlängsposition,
- einem Koppelmechanismus, der auf die Feststellvorrichtung (120) einwirkt und diese entriegelt, wenn die Rückenlehne (R) in Richtung auf die Sitzfläche vorgeklappt ist, so dass das Sitzgestell (G) mit vorgeklappter Rückenlehne (R) in Sitzlängsrichtung (L) verschiebbar ist, und
- einer Memory-Einrichtung (104, 105, 107), mittels der das Sitzgestell (G) bei einer Bewegung in Sitzlängsrichtung (L) automatisch in einer einstellbaren, als Memory-Position definierten Sitzlängsposition angehalten werden kann,
**dadurch gekennzeichnet,**
**dass** an einer Schiene (102) der Längsführung (101, 102), die (102) das Sitzgestell (G) trägt und gemeinsam mit diesem in Schienenlängsrichtung (L) beweglich ist, ein Betätigungsmechanismus (301) vorgesehen ist, der mit einer Lehnenentriegelung für die vorgeklappte Rückenlehne (R) in Wirkverbindung steht und der beim Erreichen der Memory-Position des Sitzgestells (G) die Lehnenentriegelung betätigt, so dass die Rückenlehne (R) in eine Gebrauchsposition geklappt werden kann und dass der Betätigungsmechanismus (301) ein Auslöseelement (310) aufweist, das beim Erreichen der Memory-Position mit der Memory-Einrichtung in Wirkverbindung tritt und **dadurch** den Betätigungsmechanismus (301) auslöst und das über eine Hebelanordnung (312, 315) mit einem Zugmittel (320) verbunden ist, das mit der Lehnenentriegelung gekoppelt ist.

2. Kraftfahrzeugsitz nach Anspruch 1,
**dadurch gekennzeichnet,**
**dass** der Betätigungsmechanismus (301) automatisch ausgelöst wird, wenn das Sitzgestell (G) die Memory-Position erreicht hat.

3. Kraftfahrzeugsitz nach Anspruch 1 oder 2,
**dadurch gekennzeichnet,**
**dass** das Auslöseelement (310) durch einen schwenkbar gelagerten Auslösehebel gebildet wird.

4. Kraftfahrzeugsitz nach einem der vorhergehenden Ansprüche,
**dadurch gekennzeichnet,**
**dass** das Auslöseelement (310) einen Anschlaghaken (311) aufweist, der beim Erreichen der Memory-Position mit der Memory-Einrichtung (104, 105, 107) in Anschlag gerät.

5. Kraftfahrzeugsitz nach einem der vorhergehenden Ansprüche,
**dadurch gekennzeichnet,**
**dass** das Auslöseelement (310) über die Seele eines Bowdenzugs (302) mit der Lehnenentriegelung gekoppelt ist.

6. Kraftfahrzeugsitz nach einem der vorhergehenden Ansprüche,
**dadurch gekennzeichnet,**
**dass** der Betätigungsmechanismus (301) derart elastisch vorgespannt ist, dass er außerhalb der Memory-Position des Sitzgestells (G) keine Entriegelung der Rückenlehne (R) bewirkt.

7. Kraftfahrzeugsitz nach Anspruch 6,
**dadurch gekennzeichnet,**
**dass** ein elastisches Element (303) derart auf das Auslöseelement (310) einwirkt, dass der Betätigungsmechanismus (301) außerhalb der Memory-Position des Sitzgestells (G) keine Entriegelung der Rückenlehne (R) bewirkt.

8. Kraftfahrzeugsitz nach einem der vorhergehenden Ansprüche,
**dadurch gekennzeichnet,**
**dass** das Zugmittel (320) bezüglich des Koppelmechanismus eine separate Baugruppe bildet.

9. Kraftfahrzeugsitz nach einem der vorhergehenden Ansprüche,
**dadurch gekennzeichnet,**
**dass** der Betätigungsmechanismus (301) bezüglich des Koppelmechanismus eine separate Baugruppe bildet.

## Claims

1. Motor vehicle seat with
- a seat frame (G)
- a backrest (R) which is mounted for pivotal movement on the seat frame (G) and which in a released state can be folded forwards from its useful position towards a seat surface of the seat frame (G)
- a longitudinal guide (101, 102) with which the seat frame (G) can be moved in the longitudinal direction (L) of the seat in order to adjust the longitudinal position of the seat
- a fixing device (120) for locking the seat frame (G) in a previously adjusted longitudinal position of the seat
- a coupling mechanism which acts on the fixing device (120) and releases this when the backrest (R) has been folded forwards towards the seat surface so that the seat frame (G) can be displaced in the longitudinal direction (L) of the seat with the backrest (R) folded forwards, and
- a memory device (104, 105, 107) by means of which the seat frame (G) when moving in the longitudinal direction (L) of the seat can be automatically stopped in an adjustable seat longitudinal position defined as the memory position
**characterised in that**
on a rail (102) of the longitudinal guide (101, 102) which (102) supports the seat frame (G) and is movable together with the latter in the longitudinal direction (L) of the rail, there is an actuating mechanism (301) which is in active connection with a backrest release for the forward-folded backrest (R) and which on reaching the memory position of the seat frame (G) actuates the backrest release so that the backrest (R) can be folded into a useful position and that the actuating mechanism (301) has a releasing element (310) which on reaching the memory position comes into active connection with the memory device and thereby releases the actuating mechanism (301) and which is connected by a lever assembly (312, 315) with a traction means (320) which is coupled to the backrest release.

2. Motor vehicle seat according to claim 1,
**characterised in that**
the actuating mechanism (301) is automatically released when the seat frame (G) has reached the memory position.

3. Motor vehicle seat according to claim 1 or 2,
**characterised in that**
the releasing element (310) is formed by a pivotally mounted release lever.

4. Motor vehicle seat according to one of the preceding claims,
**characterised in that**
the releasing element (310) has a stop hook (311) which on reaching the memory position engages with the memory device (104, 105, 107).

5. Motor vehicle seat according to one of the preceding claims,
**characterised in that**
the releasing element (310) is coupled to the backrest release by the core of a Bowden cable (302).

6. Motor vehicle seat according to one of the preceding claims,
**characterised in that**
the actuating mechanism (301) is elastically pretensioned so that outside of the memory position of the seat frame (G) it causes no release of the backrest (R).

7. Motor vehicle seat according to claim 6,
**characterised in that**
an elastic element (303) acts on the releasing element (310) so that outside of the memory position of the seat frame (G) the actuating mechanism (301) causes no release of the backrest (R).

8. Motor vehicle seat according to one of the preceding claims,
**characterised in that**
the traction means (320) form a separate structural unit in relation to the coupling mechanism.

9. Motor vehicle seat according to one of the preceding claims,
**characterised in that**
the actuating mechanism (301) forms a separate structural unit in relation to the coupling mechanism.

## Revendications

1. Siège de véhicule, comportant
- une carcasse de siège (G),
- un dossier de siège (R) qui est monté pivotant sur la carcasse de siège (G) et qui, dans un état de déverrouillage, peut être rabattu vers l'avant depuis sa position d'utilisation en direction d'une surface de siège de la carcasse de siège (G),
- un guidage longitudinal (101, 102) avec lequel la carcasse de siège (G) peut être déplacée pour régler la position en longueur dans une direction longitudinale de siège (L),
- un dispositif de blocage (120) pour arrêter la carcasse de siège (G) dans une position longitudinale réglée auparavant,
- un mécanisme de couplage qui agit sur le dispositif de blocage (120) et déverrouille celui-ci lorsque le dossier (R) est rabattu en avant en direction de la surface de siège, de telle sorte que la carcasse de siège (G) avec le dossier (R) rabattu en avant est déplaçable en direction longitudinale de siège (L), et
- un système à mémoire (104, 105, 107) au moyen duquel la carcasse de siège (G) peut, en cas de mouvement en direction longitudinale de siège (L), être automatiquement arrêtée dans une position longitudinale de siège définie à titre de position à mémoire,
**caractérisé en ce que**
il est prévu, sur un rail (102) du guidage longitudinal (101, 102), lequel rail (102) porte la carcasse de siège (G) et est mobile conjointement avec celle-ci en direction longitudinale des rails (L), un mécanisme d'actionnement (301) qui est en liaison active avec un déverrouillage de dossier pour le dossier (R) rabattu en avant et qui, lorsque la position à mémoire de la carcasse de siège (G) est atteinte, actionne le déverrouillage de dossier, de telle sorte que le dossier (R) peut être rabattu dans une position d'utilisation, et **en ce que** le mécanisme d'actionnement (301) présente un élément de déclenchement (310) qui, lorsque la position à mémoire est atteinte, vient en liaison active avec le système à mémoire et déclenche ainsi le mécanisme d'actionnement (301) et qui est relié via un agencement à levier (312, 315) avec un moyen de traction (320) qui est accouplé au déverrouillage de dossier.

2. Siège de véhicule automobile selon la revendication 1,
**caractérisé en ce que**
le mécanisme d'actionnement (301) est automatiquement déclenché lorsque la carcasse de siège (G) a atteint la position à mémoire.

3. Siège de véhicule automobile selon la revendication 1 ou 2,
**caractérisé en ce que**
l'élément de déclenchement (310) est formé par un levier de déclenchement monté pivotant.

4. Siège de véhicule automobile selon l'une quelconque des revendications précédentes,
**caractérisé en ce que**
l'élément de déclenchement (310) présente un crochet de butée (311) qui, lorsque la position à mémoire est atteinte, vient en butée avec le système à mémoire (104, 105, 107).

5. Siège de véhicule automobile selon l'une quelconque des revendications précédentes,
**caractérisé en ce que**
l'élément de déclenchement (310) est accouplé au déverrouillage de dossier via l'âme d'un câble Bowden (302).

6. Siège de véhicule automobile selon l'une quelconque des revendications précédentes,
**caractérisé en ce que**
le mécanisme d'actionnement (301) est élastiquement précontraint de telle sorte qu'en dehors de la position à mémoire de la carcasse de siège (G), il ne provoque pas de déverrouillage du dossier (R).

7. Siège de véhicule automobile selon la revendication 6,
**caractérisé en ce que**
un élément élastique (303) agit sur l'élément de déclenchement (310) de telle sorte qu'en dehors de la position à mémoire de la carcasse de siège (G), le mécanisme d'actionnement (301) ne provoque pas de déverrouillage du dossier (R).

8. Siège de véhicule automobile selon l'une quelconque des revendications précédentes,
**caractérisé en ce que**
le moyen de traction (320) forme un ensemble séparé par rapport au mécanisme d'accouplement.

9. Siège de véhicule automobile selon l'une quelconque des revendications précédentes,
**caractérisé en ce que**
le mécanisme d'actionnement (301) forme un ensemble séparé par rapport au mécanisme d'accouplement.
